# EUROPEAN PATENT SPECIFICATION

(11) **EP 3 092 327 B1**
(45) Date of publication and mention of the grant of the patent: **11.09.2024**
(21) Application number: 15700159.5
(22) Date of filing: 09.01.2015
(51) Int. Cl.: C25B 15/02, C25B 1/04, C25B 9/00

(54) **METHODS AND APPARATUS FOR CONTROLLING OXYHYDROGEN GENERATION**
VERFAHREN UND VORRICHTUNG ZUR STEUERUNG DER KNALLGASERZEUGUNG
PROCÉDÉS ET APPAREILS DE COMMANDE DE GÉNÉRATION D'OXY-HYDROGÈNE

(30) Priority: 10.01.2014 GB 201400439
(43) Date of publication of application: 16.11.2016
(73) Proprietor: Pearson, Robert Stuart Lawrence, Nottingham, Nottinghamshire NG8 2RQ (GB)
(72) Inventor: PEARSON, Robert Stuart Lawrence, Nottingham, Nottingham-shire NG8 2RQ (GB); STAPLES, Frank Chester, Nottingham, Nottingham-shire NG3 7DL (GB)
(74) Representative: Swindell & Pearson Limited
(86) International application number: PCT/GB2015/050038
(87) International publication number: WO 2015/104556

(56) References cited:
- DE-A1- 19 941 261
- US-A- 5 711 865
- US-A1- 2003 051 998
- US-A1- 2005 209 800

## Description

### TECHNOLOGICAL FIELD

Embodiments of the present invention relate to methods and apparatus for controlling oxyhydrogen generation. In particular, they relate to methods and apparatus for controlling oxyhydrogen generation for vehicle fuel systems.

### BACKGROUND

Internal combustion engines, such as those used in vehicles, combust a chemical fuel mixed with oxygen, the oxygen being present in air drawn in through an air intake. Typically, chemical fuels used in internal combustion engines comprise hydrocarbons, and the emissions from such internal combustion engines are known to be detrimental to the environment. Further, internal combustion engines are inefficient.

It would therefore be desirable to provide an alternative system.

DE 199 41 261 A1 relates to an oxyhydrogen generator for a self-contained eco-energy house. Water is decomposed by electrolytic and photolytic processes running in parallel in the oxyhydrogen generator. The oxyhydrogen generator has an automatic control and regulation system for the production of an oxyhydrogen mixture aimed at maximising the amount of oxyhydrogen generated.

US 2005/209800 A1 relates to an electrolyzer cell for disassociating water into hydrogen and oxygen. The water entering the electrolyzer cell is air-cooling and/or liquid-cooling and if the temperature of the stream of oxygen and water exiting the electrolyzer cell is too high operation of the electrolyzer cell is suspended.

US 2003/051998 A1 relates to a security control system for an oxyhydrogen fuel producing apparatus. The security control system includes a temperature control device which actuates a fan to cool the electrolyte when its temperature exceeds 50°C until its temperature is reduced to 40°C and cuts off electric power to the oxyhydrogen fuel producing apparatus if the temperature of the electrolyte exceeds 80°C even when the fan is working.

US 5 711 865 A relates to an electrolytic gas producer apparatus for producing mixed hydrogen and oxygen gases from water for use as a fuel. The apparatus comprises a plurality of cells each with its own power supply, electrodes and collection means. Current/voltage regimes for each cell may be at least in part controlled in response to temperature, back pressure or the like associated with each cell.

### BRIEF SUMMARY

According to various embodiments of the invention there is provided a method for control of an oxyhydrogen gas generator in an oxyhydrogen gas generator system, an oxyhydrogen gas generator control system for control of an oxyhydrogen gas generator in an oxyhydrogen gas generator system, and a computer program according to the appended claims.

### BRIEF DESCRIPTION

For a better understanding of various examples that are useful for understanding the brief description, reference will now be made by way of example only to the accompanying drawings in which:
Fig. 1 illustrates a schematic diagram of a system according to various examples.
Fig. 2 illustrates a schematic diagram of a controller according to various examples.
Fig. 3 illustrates a schematic diagram of a fluid circulation system according to various examples.
Fig. 4 illustrates a schematic diagram of a system according to a first example.
Fig. 5 illustrates a schematic diagram of a system according to a second example.
Fig. 6 illustrates a schematic diagram of a system according to a third example.
Fig. 7 illustrates a schematic diagram of a further fluid circulation system according to various examples.
Fig. 8 illustrates a schematic diagram of an oxyhydrogen gas generator plate arrangement according to various examples.
Fig. 9 illustrates a flow diagram of a method according to various examples.
Fig. 10 illustrates a flow diagram of a method according to a first example.
Fig. 11 illustrates a flow diagram of a method according to a second example.
Fig. 12 illustrates a flow diagram of a method according to a third example.
Fig. 13 illustrates a schematic diagram of a vehicle according to various examples.

### DETAILED DESCRIPTION

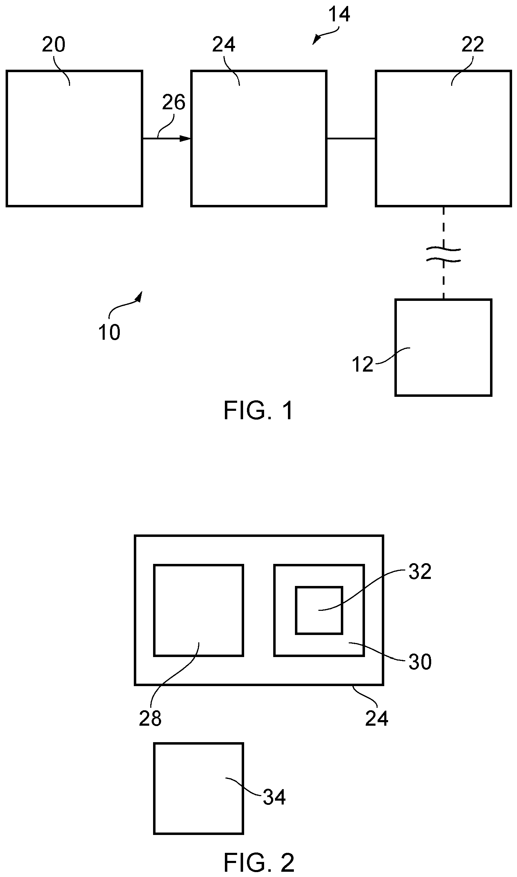

Fig. 1 illustrates a schematic diagram of a system 10 including an oxyhydrogen gas generator 12, an oxyhydrogen gas generator control system 14, one or more measurement devices 20 and a first switch 22.

The oxyhydrogen gas generator control system 14 comprises a controller 24 configured to receive output 26 from one or more measurement devices 20. The received output 26 is dependent on the measurement of one or more parameters associated with the oxyhydrogen gas generator system 10. The controller 24 is further configured to control a first switch 22, to control the operation of the oxyhydrogen gas generator 12, dependent on the value of the one or more measured parameters, the first switch 22 having a first state and a second state.

The parameters may comprise physical parameters relating to the oxyhydrogen gas generator system 10, such as electrical power and temperature, or relating to a fluid supplied to the oxyhydrogen gas generator system 10, such as temperature, level and flow.

The implementation of the controller 24 can be in hardware alone (for example, a circuit, a processor and so on), have certain aspects in software including firmware alone or can be a combination of hardware and software (including firmware). Fig. 2 illustrates one form of the controller 24.

The controller 24 may be implemented using instructions that enable hardware functionality, for example, by using executable computer program instructions in a general-purpose or special-purpose processor 28 that may be stored on a computer readable storage medium 30 (disk, memory etc) to be executed by such a processor 28.

The processor 28 is configured to read from and write to the memory 30. The processor 28 may also comprise an output interface via which data and/or commands are output by the processor 28 and an input interface via which data and/or commands are input to the processor 28.

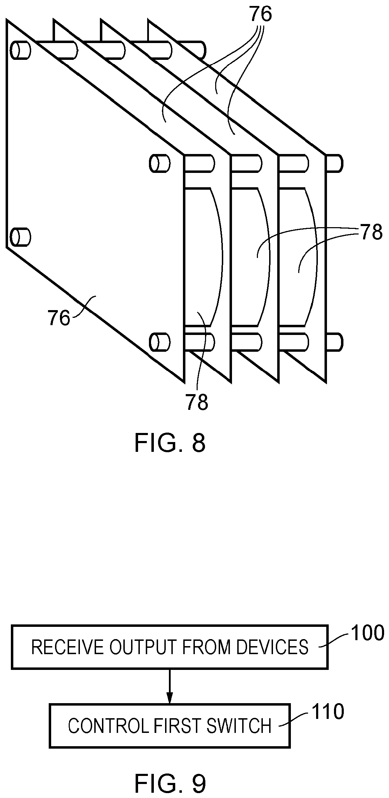

The memory 30 stores a computer program 32 comprising computer program instructions (computer program code) that controls the operation of the oxyhydrogen gas generator control system 14 when loaded into the processor 28. The computer program instructions, of the computer program 32, provide the logic and routines that enables the oxyhydrogen gas generator control system 14 to perform the method illustrated in Figs. 9 to 12. The processor 28 by reading the memory 30 is able to load and execute the computer program 32.

The computer program 32 may arrive at the oxyhydrogen gas generator control system 14 via any suitable delivery mechanism 34. The delivery mechanism 34 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 32. The delivery mechanism 34 may be a signal configured to reliably transfer the computer program 32. The oxyhydrogen gas generator control system 14 may propagate or transmit the computer program 32 as a computer data signal.

Although the memory 30 is illustrated as a single component it may be implemented as one or more separate components some or all of which may be integrated/removable and/or may provide permanent/semi-permanent/ dynamic/cached storage.

Although the processor 28 is illustrated as a single component it may be implemented as one or more separate components some or all of which may be integrated/removable.

References to 'computer-readable storage medium', 'computer program product', `tangibly embodied computer program' etc. or a `controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In more detail, Fig. 1 illustrates an oxyhydrogen gas generator control system 14 for controlling an oxyhydrogen gas generator 12 in an oxyhydrogen gas generator system 10 according to various embodiments of the invention. The oxyhydrogen gas generator control system 14 may be comprised in an oxyhydrogen gas generator system 10.

The first switch 22, which the controller 24 is configured to control, and which may form part of the oxyhydrogen gas generator control system 14 or be separate thereto, may be an electrically controllable switch, such as a relay. The first switch 22 may be, for example, a single pole, single throw switch or relay. The states of the first switch 22 may define a closed state and an open state. When the first switch 22 is of a single pole, single throw configuration, the first switch 22 has one contact with a closed state and an open state.

Alternatively the first switch 22 may be a single pole, double throw switch or relay. When the first switch 22 is of a single pole, double throw configuration, the first switch 22 has two contacts, a first contact and a second contact, each with a closed state and an open state. The first contact is equivalent to the one contact in the single pole, single throw configuration. In the single pole, double throw configuration, when one contact is closed, the other contact is open and vice-versa.

For example, when the first contact is in a closed state the second contact is in an open state and when the first contact is in an open state the second contact is in a closed state. The one contact of the single pole, single throw configuration and the first contact of the single pole, double throw configuration may operate as will be described below, wherein the described first state of the one contact in the single pole, single throw switch configuration is equivalent to the first contact of the single pole, double throw switch being in a first state, which state may be a closed state, and the described second state of the one contact in the single pole, single throw switch configuration is equivalent to the first contact of the single pole, double throw switch being in an second state, which state may be an open state.

In the single pole, double throw configuration, the second contact may be connected to one or more indicator device, such as a light emitting device, for example a bulb or light emitting diode (LED), a sounder, for example a speaker, or other indicator device to indicate to a user whether the first and/or second contact is in a closed or open state. For example, when the first contact is in an open state, the second contact is in a closed state and an LED may be illuminated to indicate the state of the system to a user, for example that the system is not operational, or alternatively that the system is operational.

The first switch 22 is configured to facilitate the provision of electrical power to a first component of the oxyhydrogen gas generator system 10 when in the first state and to facilitate prevention of the provision of electrical power to the first component of the oxyhydrogen gas generator system 10 when in the second state. This provides the benefit of automatically shutting off the oxyhydrogen gas generator system 10, or at least a first component of the oxyhydrogen gas generator system 10, when the first switch 22 is controlled by the controller 24 to be in a second state, to prevent the provision of electrical power to components, such as the first component, of the oxyhydrogen gas generator system 10.

The ability to automatically shut off of the oxyhydrogen gas generator system 10, or at least a first component of the oxyhydrogen gas generator system 10, may help to prevent damage to the components of the oxyhydrogen gas generator system 10 and/or prevent dangerous conditions being present due to the operation of the oxyhydrogen gas generator system 10, and in particular due to the operation of the first component of the oxyhydrogen gas generator system 10. For example, the automatic shutoff of the oxyhydrogen gas generator system 10, or at least a first component of the oxyhydrogen gas generator system 10, may help to prevent overheating of the system, such that a risk of fire is reduced or eliminated.

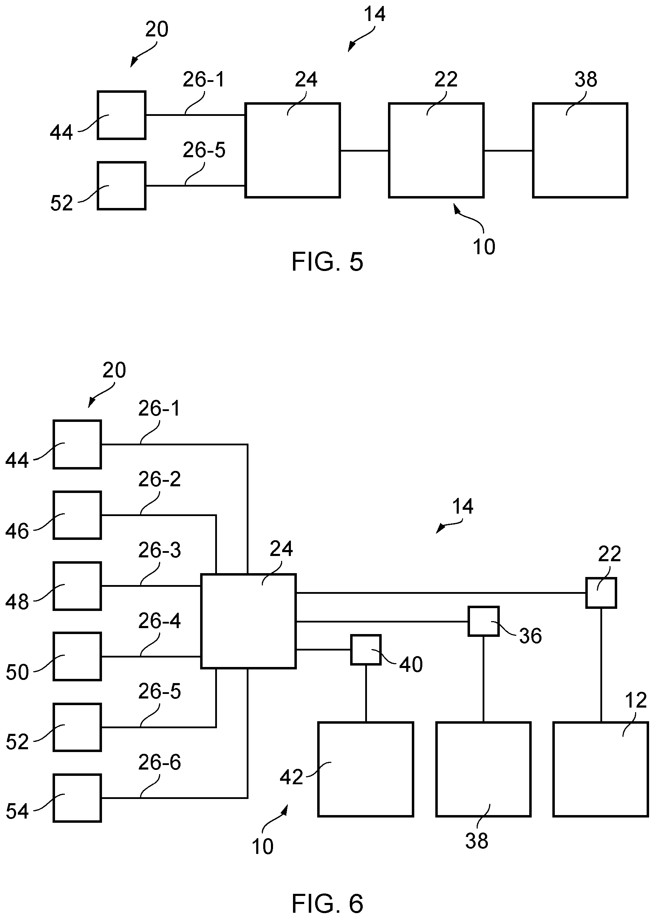

The first component of the oxyhydrogen gas generator system 10 may be either the oxyhydrogen gas generator 12 or a heater 38 (see Figs. 5 and 6) associated with the oxyhydrogen gas generator system 10.

Control of the oxyhydrogen gas generator 12 may be direct, for example by the supply of electrical power to the oxyhydrogen gas generator 12, or indirect, for example by the control of a heater 38 associated with the oxyhydrogen gas generator system 10. The heater 38 may be configured to heat a fluid passing through or to be passed through the oxyhydrogen gas generator 12. The heater 38 may be configured to control, at least in part, the chemical reactions in the oxyhydrogen gas generator 12, in particular to control an electrolytic process carried out in, or at, the oxyhydrogen gas generator 12, and therefore to control the operation of the oxyhydrogen gas generator 12.

The efficiency of the electrolytic process may be dependent on the temperature of a fluid in the oxyhydrogen gas generator 12. The oxyhydrogen gas generator 12 is configured to provide a process of electrolysis. In the process of electrolysis at the oxyhydrogen gas generator 12, electric current is provided to a fluid, which may be a water based solution, to dissociate water molecules.

In order to aid understanding of embodiments of the invention, the components of the system 10 are described in more detail below. In various embodiments some of the components may be omitted. For example, one or more of the measurement devices 20 may be omitted.

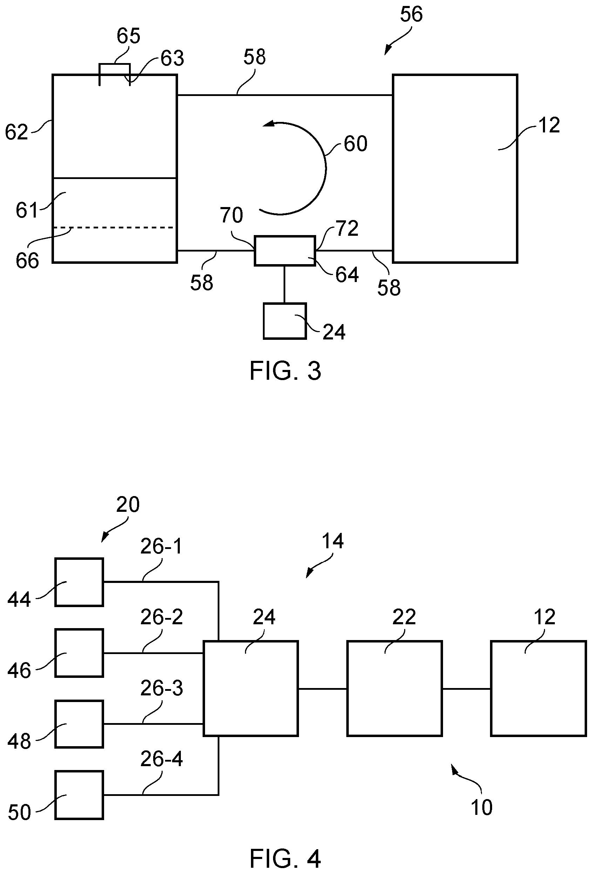

Fig. 3 illustrates an example fluid circulation system 56 according to various embodiments. The oxyhydrogen gas generator system 10 may comprise the fluid circulation system 56. The fluid circulation system 56 is configured to supply a fluid to the oxyhydrogen gas generator 12.

A fluid supply 61 may be contained in a vessel 62. The vessel 62 may be a fluid tank or reservoir. The vessel 62 may have an aperture 63 to facilitate the insertion of a fluid into the vessel 62, by a user. The aperture 63 may be positioned on an upper part, or the uppermost part, of the vessel 62, to facilitate access by the user. The aperture 63 may be closable by the use of a closure 65, such as a screw cap or press fitting cap. The vessel 62 may be operationally connected to, or associated with, the oxyhydrogen gas generator 12, such that fluid from the vessel 62 may be passed or transported to, or through, the oxyhydrogen gas generator 12. None, one or more intermediate components may exist between the vessel 62 and the oxyhydrogen gas generator 12.

A pump 64 or similar device may be configured, or may be used, to facilitate the passage or transportation of the fluid from the vessel 62 to the oxyhydrogen gas generator 12. The pump 64 or similar device may be controlled by the controller 24. The pump 64 or similar device may only be operational when the fluid level in the vessel 62 is detected to be above a minimum threshold level, which may be at a minimum operative level 66.

By preventing operation of the pump 64 when the fluid level is below a minimum threshold level corresponding to a minimum operational level 66, damage to the pump 64 or other components of the oxyhydrogen gas generator system 10 is minimized or prevented. The pump 64 may be a positive displacement pump such as a peristaltic pump, an impeller pump or a flexible impeller pump. Alternatively, the pump 64 may be an impulse pump. Alternatively, the pump 64 may be a velocity pump, such as a centrifugal pump.

The fluid may be a liquid. The liquid may be a solution. The solution may comprise water and an electrolyte. The water may comprise distilled water, such that impurities, including various minerals and ions, do not affect the operation of the oxyhydrogen gas generator 12. The electrolyte may be a hydroxide containing compound. The electrolyte may be potassium hydroxide. Alternatively the electrolyte may be sodium hydroxide. The electrolyte may be of a purity between 90% and 100%, or between 95% and 100%. The electrolyte may be, for example, 95% purity. The potassium hydroxide may be provided in the solution in a range from 0.5 grams per litre of distilled water to 1.2 grams per litre of distilled water, or in a range from 0.8 grams per litre of distilled water to 1.0 grams per litre of distilled water. Specifically, potassium hydroxide may be provided at 0.8 grams per litre of distilled water. Alternatively, potassium hydroxide may be provided at 1.0 grams per litre of distilled water.

At such concentrations, the potassium hydroxide solution may not be corrosive and may not therefore be detrimental to the operation of the oxyhydrogen gas generator 12, or ultimately to an engine that the oxyhydrogen gas generator 12 may be associated with or connected to. The oxyhydrogen gas produced from, or provided by, the potassium hydroxide solution may also provide a beneficial cleaning function of the associated or connected engine, by reducing the amount of hydrocarbon based fuel required, and providing a more complete burn of the hydrocarbon based fuel in the combustion process in the engine.

The fluid circulation system 56 comprises passageways 58 for the passage or transportation of a fluid, such as may be formed using pipes or tubes. The passageways 58 may be formed of metal, plastic, elastomeric material, or other material, or combination thereof, which is chemically compatible with, or chemically inert to, the electrolyte solution. In particular it may be formed of material which is chemically compatible with, or chemically inert to, a potassium hydroxide solution.

The fluid circulation system 56 provides a fluid circulation path, for the circulation of a fluid from the fluid supply 61, in a first direction 60, to the oxyhydrogen gas generator 12, and back to the fluid supply 61. As described above, the oxyhydrogen gas generator system 10 may comprise a vessel 62 for containment of the fluid supply 61. Furthermore, the fluid from that vessel 62 may be carried or transported to the oxyhydrogen gas generator 12, such that the fluid is present at the oxyhydrogen gas generator 12, to facilitate the production of hydrogen gas and oxygen gas via a process of electrolysis. A mixture of hydrogen gas and oxygen gas may be called oxyhydrogen. Typically the ratio of hydrogen to oxygen, produced by the oxyhydrogen gas generator 12, is 2:1. Oxyhydrogen, when ignited, converts to water vapour and releases energy. The oxyhydrogen gas generator 12 may produce monatomic hydrogen, which may be quickly injected into the air intake of an engine in a vehicle 16.

The vessel 62 and the oxyhydrogen gas generator 12 describe two points in the fluid circulation path. As previously noted, a pump 64 or similar device may be used to facilitate the carriage, or transportation, of fluid from the vessel 62 to the oxyhydrogen gas generator 12. The pump 64 or similar device may be located between the vessel 62 and the oxyhydrogen gas generator 12. The pump 64 may have an intake 70 connected to the passageway 58 leading from the vessel 62, and an outlet 72 connected to the passageway 58 leading to the oxyhydrogen gas generator 12. Oxyhydrogen gas produced at the oxyhydrogen gas generator 12 may pass, or be conveyed, from the oxyhydrogen gas generator 12 to a connected or associated engine air intake either directly or via the vessel 62. Various passageways 58 may connect these and/or further additional components in the fluid circulation path.

Example embodiments of the invention are illustrated in Figs. 4, 5 and 6. Features of the apparatus that are the same or similar as corresponding features in the apparatus that can be seen in Fig. 1 or in the others of Figs. 4, 5 and 6, and described herein, are referenced by the same reference numerals.

Each of the measurement devices 20 may form part of the oxyhydrogen gas generator control system 14 or be separate thereto. The measurement devices 20, from one or more of which the controller 24 is configured to receive output, may include one or more of a power supply measurement device 44, a fluid level measurement device 46, a fluid flow measurement device 48, one or a plurality of temperature measurement devices. The one or the plurality of temperature measurement devices may include an ambient temperature measurement device 50 and/or one or more fluid temperature measurement devices. The one or more fluid temperature measurement devices may include a first fluid temperature measurement device 52. Additionally, the one or more fluid temperature measurement devices may include a second fluid temperature measurement device 54. In various embodiments one or more of these measurement devices 20, may be omitted.

The power supply measurement device 44 may be configured to measure a power level by measurement of a power level parameter of an electrical power supply. The power supply measurement device 44 may be configured to provide an output 26-1, dependent on the power level parameter. The controller 24 may be configured to receive the output 26-1 from the power supply measurement device 44, the received output 26-1 being dependent on the measurement of the power level parameter. The controller 24 may control the state of the first switch 22 based, at least in part, on the output 26-1.

The power level parameter may be compared to a single power level threshold. Alternatively, multiple power level thresholds may be provided relating to different power levels. The multiple power level thresholds may provide a number of discrete power level thresholds relating to different power levels at the power supply. The multiple power level thresholds may be used to provide an element of hysteresis in the system to prevent rapid switching of the output 26-1.

At or above the single power level threshold, or at or above one of the one or more multiple power level thresholds, the output 26-1 may have a first value and below the single power level threshold, or below another one of the one or more multiple level thresholds, the output 26-1 may have a second value.

The power level parameter may be a parameter relating to current and/or voltage being provided by the power supply. The power supply measurement device 44 may be, or may comprise, a power supply sensor such as a current and/or voltage meter. The power supply measurement device 44 may be configured to provide an output 26-1, with or without hysteresis. The hysteresis may help to minimise or prevent rapid switching of the first switch 22. The power supply measurement device 44 may be associated with, or comprise, an automatic voltage relay.

In one example, the power supply measurement device 44 may be configured to measure a voltage at the power supply. The single power level threshold may be a threshold between 13.5 Volts and 14.5 Volts. For example the single power level threshold may be 14 Volts. If the measured voltage is above 14 Volts then the output 26-1 may be a first value. If the measured voltage is below 14 Volts then the output 26-1 may be a second value.

The controller 24 may be configured to control the first switch 22 dependent, at least in part, on the value of the output 26-1. If the output 26-1 is a first value then the controller 24 may control the first switch 22 to be in a first state to facilitate the provision of electrical power to the first component of the oxyhydrogen gas generator system 10. If the output 26-1 is a second value then the controller 24 may control the first switch 22 to be in a second state to prevent the provision of electrical power to the first component of the oxyhydrogen gas generator system 10.

In an alternative example, if multiple power level thresholds are provided then the output 26-1 may provide a first value when the measured voltage rises above a first of the multiple power level thresholds, and not provide an output 26-1 at a second value until the measured voltage subsequently falls below a second of the multiple power level thresholds. For example, the first of the multiple power level thresholds may be 14 Volts and the second of the multiple power level thresholds may be 13.8 Volts, such that an output 26-1 is a first value when the voltage increases to a value at or above 14 Volts, and that subsequently the output is a second value when the voltage decreases to a value of 13.8 Volts or lower.

The controller 24 may be configured to control the first switch 22 dependent, at least in part, on the value of the output 26-1. If the output 26-1 is a first value then the controller 24 may control the first switch 22 to be in a first state to facilitate the provision of electrical power to the first component of the oxyhydrogen gas generator system 10. If the output 26-1 is a second value then the controller 24 may control the first switch 22 to be in a second state to prevent the provision of electrical power to the first component of the oxyhydrogen gas generator system 10.

By the power supply measurement device 44 being configured to measure a voltage at the power supply with regards to multiple power level thresholds, the system may be prevented from rapidly switching the output 26-1 between the first and second values, and thus may prevent rapid switching of the first switch 22.

The fluid level measurement device 46 may be configured to measure a fluid level by measurement of a fluid level parameter of a fluid supply 61 for the oxyhydrogen gas generator 12. The fluid level measurement device 46 may be configured to provide an output 26-2, dependent on the fluid level parameter. The controller 24 may be configured to receive the output 26-2 from the fluid level measurement device 46, the received output 26-2 being dependent on the measurement of the fluid level parameter of the fluid supply 61. The controller 24 may control the state of the first switch 22 based, at least in part, on the output 26-2. The fluid level parameter may be compared to a single fluid level threshold. Alternatively, multiple fluid level thresholds may be provided relating to different fluid levels. The multiple fluid level thresholds may provide a number of discrete fluid level thresholds relating to different fluid levels in the fluid supply 61. The multiple fluid level thresholds may be used to provide an element of hysteresis in the system to prevent rapid switching of the output 26-2.

Above the single fluid level threshold, or above one of the one or more multiple fluid level thresholds, the output 26-2 may have a first value and below the single fluid level threshold, or below another one of the one or more multiple fluid level thresholds, the output 26-2 may have a second value.

The fluid level measurement device 46 may be, or may comprise, a fluid level sensor such as a float switch. The fluid level measurement device 46 may be configured to provide an output 26-2, with or without hysteresis. The hysteresis may minimize or prevent rapid switching of the first switch 22. Alternatively, or additionally, the fluid level measurement device 46 may provide or determine a time averaged fluid level measurement. Alternatively, the controller 24 may determine, from output 26-2, an average fluid level measurement over a determined time period. The time averaged fluid level measurement may minimise or prevent rapid switching of the first switch 22.

The fluid level measurement device 46 may comprise a single sensor configured to detect a fluid level in relation to a single threshold, or have a plurality of discrete sensors configured to detect a fluid level in relation to a number of discrete thresholds. Alternatively, a single sensor may be configured to detect a fluid level in relation to a plurality of thresholds. The fluid level parameter may be a value relative to a physical fluid level of the fluid supply 61. The fluid level measurement device 46 may be configured to measure an instantaneous fluid level or a time averaged fluid level.

The fluid level measurement device 46 may be located at the vessel 62 for measuring the level of a fluid in the fluid supply 61. The fluid level measurement device 46 may be located within the vessel 62, for example the fluid level measurement device 46 may be a float switch in the vessel 62. Alternatively, the fluid level measurement device 46 may be located outside of the vessel 62, for example on a side of the vessel 62, such as a vessel wall. The fluid level measurement device 46 may be configured to measure the fluid level via indirect means or methods, such as by the use of an optical sensor which may provide a light beam projected towards the fluid, to be reflected from the fluid, back to the sensor, or which may comprise a transmitter and a separate receiver in the optical path of the transmitter to transmit a light beam or similar across an interior of the vessel 62 to be received at the receiver, from the transmitter, to measure the incidence of fluid within the light beam path.

In one example, a fluid level measurement device 46 comprising a fluid level sensor such as a float switch, may be configured to measure a fluid level of a fluid supply 61 for the oxyhydrogen gas generator 12. If the measured fluid level is above a set fluid level threshold, output 26-2 may be a first value. If the measured fluid level is below the set fluid level threshold, output 26-2 may be a second value. If the output 26-2 is a first value then the controller 24 may control the first switch 22 to be in a first state to facilitate the provision of electrical power to the first component of the oxyhydrogen gas generator system 10. If the output 26-2 is a second value then the controller 24 may control the first switch 22 to be in a second state to prevent the provision of electrical power to the first component of the oxyhydrogen gas generator system 10.

In an alternative example, if multiple fluid level thresholds are provided then the output 26-2 may provide a first value when the measured fluid level rises above a first of the multiple fluid level thresholds, and not provide an output 26-2 at a second value until the measured fluid level subsequently falls below a second of the multiple fluid level thresholds. If the output 26-2 is a first value then the controller 24 may control the first switch 22 to be in a first state to facilitate the provision of electrical power to the first component of the oxyhydrogen gas generator system 10. If the output 26-2 is a second value then the controller 24 may control the first switch 22 to be in a second state to prevent the provision of electrical power to the first component of the oxyhydrogen gas generator system 10. By the fluid flow measurement device 48 being configured to measure a fluid level of the fluid supply 61 for the oxyhydrogen gas generator 12, with regards to multiple fluid level thresholds, the system may be prevented from rapidly switching the output 26-2 between the first and second values, and thus may prevent rapid switching of the first switch 22.

The fluid flow measurement device 48 may be configured to measure a fluid flow by measurement of a fluid parameter of a fluid from a fluid supply 61 for the oxyhydrogen gas generator 12. For example, the fluid flow measurement device 48 may measure a fluid flow rate or a pressure value of the fluid. The fluid flow measurement device 48 may be configured to provide an output 26-3, dependent on the fluid flow parameter. The controller 24 may be configured to receive the output 26-3 from the fluid flow measurement device 48, the received output 26-3 being dependent on the measurement of the fluid flow parameter.

The controller 24 may control the state of the first switch 22 based, at least in part, on the output 26-3. The fluid flow parameter may be compared to a single fluid flow threshold. Alternatively, multiple fluid flow thresholds may be provided relating to different fluid flows. The multiple fluid flow thresholds may provide a number of discrete fluid flow thresholds relating to different fluid flow, such as different fluid flow rates, in the fluid circulation system 56. The multiple fluid flow thresholds may be used to provide an element of hysteresis in the system to prevent rapid switching of the output 26-3.

Above the single fluid flow threshold, or above one of the one or more multiple fluid flow thresholds, the output 26-3 may have a first value and below the single fluid flow threshold, or below another one of the one or more multiple fluid flow thresholds, the output 26-3 may have a second value.

The fluid flow measurement device 48 may be, or may comprise, a mechanical flow meter, a pressure flow meter or an optical flow meter, any of which may be configured to provide an output 26-3, with or without hysteresis. The hysteresis may minimize or prevent rapid switching of the first switch 22. For example, a pressure flow meter comprising a microswitch may be provided within the fluid flow. The microswitch may be set to switch between states, i.e. a switched state and an unswitched state, when the pressure exerted by the fluid in at least a part of the fluid circulation system 56 exceeds a set or predetermined value.

Alternatively or additionally, the fluid flow measurement device 48 may provide or determine a time averaged fluid flow measurement. Alternatively, the controller 24 may determine, from output 26-3, an average fluid flow measurement over a determined time period. The time averaged fluid flow measurement may minimise or prevent rapid switching of the first switch 22.

The fluid flow measurement device 48 may be, or may comprise, a fluid flow sensor and be configured to measure the flow of fluid in the fluid circulation path. The fluid flow measurement device 48 may be positioned within or along the fluid circulation path. The fluid flow measurement device 48 may be positioned before the pump 64 or similar device or after the pump 64 or similar device in the fluid circulation path in a first direction 60 of the flow of the fluid from the fluid supply 61 in the vessel 62.

In one example, a fluid flow measurement device 48, comprising a microswitch, may be configured to measure a pressure of a fluid flow. If the measured pressure is above a set or predetermined pressure threshold of the microswitch then the microswitch switches, from an unswitched state to a switched state, and output 26-3 may be a first value. If the measured pressure is below the set or predetermined pressure threshold of the microswitch then the microswitch does not switch, or, if previously in a switched state, reverts to an unswitched state and output 26-3 may be a second value. The controller 24 may be configured to control the first switch dependent, at least in part, on the value of the output 26-3. If the output 26-3 is a first value then the controller 24 may control the first switch 22 to be in a first state to facilitate the provision of electrical power to the first component of the oxyhydrogen gas generator system 10. If the output 26-3 is a second value then the controller 24 may control the first switch 22 to be in a second state to prevent the provision of electrical power to the first component of the oxyhydrogen gas generator system 10.

In an alternative example, if multiple pressure thresholds are provided then the output 26-3 may provide a first value when the measured pressure rises above a first of the multiple pressure thresholds, and not provide an output 26-3 at a second value until the measured pressure subsequently falls below a second of the multiple pressure thresholds.

The controller 24 may be configured to control the first switch dependent, at least in part, on the value of the output 26-3. If the output 26-3 is a first value then the controller 24 may control the first switch 22 to be in a first state to facilitate the provision of electrical power to the first component of the oxyhydrogen gas generator system 10. If the output 26-3 is a second value then the controller 24 may control the first switch 22 to be in a second state to prevent the provision of electrical power to the first component of the oxyhydrogen gas generator system 10. By the fluid flow measurement device 48 being configured to measure a pressure of the fluid flow with regards to multiple pressure threshold levels, the system may be prevented from rapidly switching the output 26-3 between the first and second values, and thus may prevent rapid switching of the first switch 22.

The ambient temperature measurement device 50 may be configured to measure an ambient temperature by measurement of an ambient temperature parameter of the air surrounding the oxyhydrogen gas generator 12. The ambient temperature measurement device 50 may be configured to provide an output 26-4, dependent on the ambient temperature parameter. The controller 24 may be configured to receive the output 26-4 from the ambient temperature measurement device 50, the received output 26-4 being dependent on the measurement of the ambient temperature parameter.

The controller 24 may control the state of the first switch 22 based, at least in part, on the output 26-4. The ambient temperature parameter may be compared to a single ambient temperature threshold. Alternatively, multiple ambient temperature thresholds may be provided relating to different ambient temperatures. The multiple ambient temperature thresholds may provide a number of discrete ambient temperature thresholds relating to different ambient temperatures in the air surrounding the oxyhydrogen gas generator 12. The multiple ambient temperature thresholds may be used to provide an element of hysteresis in the system to prevent rapid switching of the output 26-4.

Below the single ambient temperature threshold, or below one of the one or more multiple ambient temperature thresholds, the output 26-4 may have a first value and above the single ambient temperature threshold, or above another one of the one or more multiple ambient temperature thresholds, the output 26-4 may have a second value.

The ambient temperature measurement device 50 may be, or may comprise, a temperature sensor such as a thermocouple or thermistor. The ambient temperature measurement device 50 may be configured to provide an output 26-4, with or without hysteresis. The hysteresis may minimize or prevent rapid switching of the first switch 22. The ambient temperature measurement device 50 may provide or determine a time averaged ambient temperature measurement. Alternatively, the controller 24 may determine, from output 26-4, an average ambient temperature measurement over a determined time period. The time averaged ambient temperature measurement may minimise or prevent rapid switching of the first switch 22.

The ambient temperature measurement device 50 may be positioned above the oxyhydrogen gas generator system 10. A plurality of ambient temperature measurement devices 50 may be positioned in different locations around the oxyhydrogen gas generator system 10 and an average value, such as a mean or median value, of the ambient temperature may be calculated. The calculation may be made or performed at the controller 24. The ambient temperature parameter threshold may be set in the range of 60°C to 70°C. The ambient temperature parameter threshold may be 65°C.

In one example, the ambient temperature measurement device 50, comprising an ambient temperature sensor, may be configured to measure an ambient temperature parameter of the air surrounding the oxyhydrogen gas generator 12. The ambient temperature parameter threshold may be a threshold between 60°C and 70°C. For example, the ambient temperature parameter threshold may be 65°C. If the measured ambient temperature is below 65°C then the output 26-4 may be a first value. If the measured ambient temperature is above 65°C then the output 26-4 may be a second value.

The controller 24 may be configured to control the first switch 22 dependent, at least in part, on the value of the output 26-4. If the output 26-4 is a first value then the controller 24 may control the first switch 22 to be in a first state to facilitate the provision of electrical power to the first component of the oxyhydrogen gas generator system 10. If the output 26-4 is a second value then the controller 24 may control the first switch 22 to be in a second state to prevent the provision of electrical power to the first component of the oxyhydrogen gas generator system 10.

In an alternative example, if multiple ambient temperature parameter thresholds are provided then the output 26-4 may provide a second value when the measured ambient temperature rises above a first of the multiple ambient temperature thresholds, and not provide an output 26-4 at a first value until the measured ambient temperature subsequently falls below a second of the multiple ambient temperature thresholds. For example the first of the multiple threshold levels may be 65°C and the second of the multiple threshold levels may be 60°C.

The controller 24 may be configured to control the first switch 22 dependent, at least in part, on the value of the output 26-4. If the output 26-4 is a first value then the controller 24 may control the first switch 22 to be in a first state to facilitate the provision of electrical power to the first component of the oxyhydrogen gas generator system 10. If the output 26-4 is a second value then the controller 24 may control the first switch 22 to be in a second state to prevent the provision of electrical power to the first component of the oxyhydrogen gas generator system 10.

By the ambient temperature measurement device 50 being configured to measure an ambient temperature parameter of the air surrounding the oxyhydrogen gas generator 12 with regards to multiple threshold levels, the system may be prevented from rapidly switching the output 26-4 between the first and second values, and thus may prevent rapid switching of the first switch 22.

The first fluid temperature measurement device 52 may be configured to measure a first fluid temperature by measurement of a first fluid temperature parameter of a fluid being supplied or to be supplied to the oxyhydrogen gas generator 12. The first fluid temperature measurement device 52 may be configured to provide an output 26-5, dependent on the first fluid temperature parameter. The controller 24 may be configured to receive the output 26-5 from the first fluid temperature measurement device 52, the received output 26-5 being dependent on the measurement of the first fluid temperature parameter of the fluid.

The controller 24 may control the state of the first switch 22 based, at least in part, on the output 26-5. The first fluid temperature parameter may be compared to a single first fluid temperature threshold. Alternatively, multiple first fluid temperature thresholds may be provided relating to different first fluid temperatures. The multiple first fluid temperature thresholds may provide a number of discrete first fluid temperature thresholds relating to different first fluid temperatures of a fluid being supplied or to be supplied to the oxyhydrogen gas generator 12. The multiple first fluid temperature thresholds may be used to provide an element of hysteresis in the system to prevent rapid switching of the output 26-5.

Below the single first fluid temperature threshold, or below one of the one or more multiple first fluid temperature thresholds, the output 26-5 may have a first value and above the single first fluid temperature threshold, or above another one of the one or more multiple first fluid temperature thresholds, the output 26-5 may have a second value.

The first fluid temperature measurement device 52 may be, or may comprise, a temperature sensor such as a thermocouple or thermistor. The first fluid temperature measurement device 52 may be configured to provide an output 26-5, with or without hysteresis. The hysteresis may minimize or prevent rapid switching of the first switch 22. The first fluid temperature measurement device 52 may provide or determine a time averaged first fluid temperature measurement. Alternatively, the controller 24 may determine, from output 26-5, an average first fluid temperature measurement over a determined time period. The time averaged first fluid temperature measurement may minimise or prevent rapid switching of the first switch 22.

The first fluid temperature measurement device 52 may be positioned at the vessel 62 containing the fluid supply 61, and may be positioned in the vessel 62 containing the fluid supply 61, such that it is positioned within the fluid or such that it may take a direct measurement of the fluid. Alternatively, the first fluid temperature measurement device 52 may be positioned on an outer wall of the vessel 62, at a position at, or below, a minimum operative level 66 of the fluid to measure a temperature relating to the temperature of the fluid. The first fluid temperature measurement device 52 may be adhered to the interior or exterior of the wall of the vessel 62 using an adhesive, such as cyanoacrylate. The first fluid temperature parameter threshold may be set in the range of 30°C to 70°C, or in the range 40°C to 60°C, or in the range 40°C to 50°C. The first fluid temperature parameter threshold may be 40°C.

In one example, the first fluid temperature measurement device 52, comprising a temperature sensor, may be configured to measure a first fluid temperature parameter of a fluid being supplied or to be supplied to the oxyhydrogen gas generator 12. The first fluid temperature parameter threshold may be a threshold between 30°C and 50°C. For example, the first fluid temperature parameter threshold may be 40°C. If the measured first fluid temperature is below 40°C then the output 26-5 may be a first value. If the measured first fluid temperature is above 40°C then the output 26-5 may be a second value.

The controller 24 may be configured to control the first switch 22 dependent, at least in part, on the value of the output 26-5. If the output 26-5 is a first value then the controller 24 may control the first switch 22 to be in a first state to facilitate the provision of electrical power to the first component of the oxyhydrogen gas generator system 10. If the output 26-5 is a second value then the controller 24 may control the first switch 22 to be in a second state to prevent the provision of electrical power to the first component of the oxyhydrogen gas generator system 10.

In an alternative example, if multiple first fluid temperature parameter thresholds are provided then the output 26-5 may provide a second value when the measured first fluid temperature rises above a first of the multiple first fluid temperature thresholds, and not provide an output 26-5 at a first value until the measured first fluid temperature subsequently falls below a second of the multiple first fluid temperature thresholds.

For example the first of the multiple first fluid temperature parameter thresholds may be 40°C and the second of the multiple threshold levels may be 30°C. The controller 24 may be configured to control the first switch 22 dependent, at least in part, on the value of the output 26-5. If the output 26-5 is a first value then the controller 24 may control the first switch 22 to be in a first state to facilitate the provision of electrical power to the first component of the oxyhydrogen gas generator system 10. If the output 26-5 is a second value then the controller 24 may control the first switch 22 to be in a second state to prevent the provision of electrical power to the first component of the oxyhydrogen gas generator system 10.

By the first fluid temperature measurement device 52 being configured to measure a first fluid temperature parameter of a fluid being supplied or to be supplied to the oxyhydrogen gas generator 12 with regards to multiple threshold levels, the system may be prevented from rapidly switching the output 26-5 between the first and second values, and thus may prevent rapid switching of the first switch 22.

A heater 38, which may be comprised in or be separate to the oxyhydrogen gas generator control system 14 and/or which may comprise the first component of the oxyhydrogen gas generator system 10, may be provided in or along the fluid circulation path. The heater 38 may be positioned before or after the fluid flow measurement device 48 and/or the pump 64 in the first direction 60 of the flow of the fluid from the fluid supply 61 in the vessel 62. The heater 38 may be positioned such that the first fluid temperature measurement device 52 is located upstream of the heater 38 relative to the first direction 60 of the flow of the fluid in the fluid circulation path of the oxyhydrogen gas generator system 10.

The heater 38 may be an inline heater such that the fluid is heated as it passes through the heater 38, such a heater 38 may have a heating element inside or outside of the fluid passing through the heater 38. Where multiple first fluid temperature thresholds are provided, as previously described, the efficacy of the heater 38 may be controlled to provide temperature control of the fluid, dependent on whether the one or more first fluid temperature thresholds are met or exceeded. The heater 38 provides the benefit of quickly bringing the temperature of the fluid up to an optimal working temperature. The optimal working temperature may be a temperature where the oxyhydrogen gas generator 12 will be most efficient at producing oxyhydrogen gas.

In an example illustrated in Fig. 4 the measurement devices 20 include a power supply measurement device 44 providing an output 26-1, a fluid level measurement device 46 providing an output 26-2, a fluid flow measurement device 48 providing an output 26-3, and an ambient temperature measurement device 50 providing an output 26-4. In the example of Fig. 4 the first component of the oxyhydrogen gas generator system 10 is the oxyhydrogen generator 12.

In an example illustrated in Fig. 5 the measurement devices 20 include a power supply measurement device 44 providing an output 26-1, and a first fluid temperature measurement device 52 providing an output 26-5. In the example of Fig. 5 the first component of the oxyhydrogen gas generator system 10 is a heater 38 which, at least in part, controls the temperature of the fluid which is conveyed to the oxyhydrogen gas generator 12.

Fig. 6 illustrates a schematic diagram of a system 10 including an oxyhydrogen gas generator 12, an oxyhydrogen gas generator control system 14, measurement devices 20, a first switch 22, a second switch 36 and a third switch 40. In some examples the third switch 40 may be omitted.

In the example illustrated in Fig. 6 the measurement devices 20 include a power supply measurement device 44 providing an output 26-1, a fluid level measurement device 46 providing an output 26-2, a fluid flow measurement device 48 providing an output 26-3, an ambient temperature measurement device 50 providing an output 26-4, a first fluid temperature measurement device 52 providing an output 26-5, and a second fluid temperature measurement device 54 providing an output 26-6 as further described below. In some examples the second fluid temperature measurement device 54 may be omitted. In the example of Fig. 6 the first component of the oxyhydrogen gas generator system 10 is the oxyhydrogen gas generator 12.

The controller 24 is configured to receive output 26-5 from a first fluid temperature measurement device 52, the received output 26-5 being dependent on the measurement of a first fluid temperature parameter of a fluid, which fluid is to be supplied to the oxyhydrogen gas generator 12. The first fluid temperature measurement device 52 may be as previously described. The controller 24 is configured to control a second switch 36, to control the operation of the oxyhydrogen gas generator 12, dependent on the value of the first fluid temperature parameter, the second switch 36 having a first state and a second state.

The second switch 36 is configured to facilitate the provision of electrical power to a heater 38 when in the first state and to facilitate prevention of the provision of electrical power to the heater 38 when in the second state. This provides the benefit of automatically shutting off the heater 38 when the second switch 36 is controlled by the controller 24 to prevent the provision of electrical power to the heater. The automatic shutting off of the heater 38 may help to prevent damage to the heater 38 and/or prevent dangerous conditions being present due to the operation of the heater 38. For example, the automatic shutoff of the of the heater may help to prevent overheating of the system, such that a risk of fire is reduced or eliminated.

The second switch 36, which the controller 24 is configured to control, and which may form part of the oxyhydrogen gas generator control system 14 or be separate thereto, may be an electrically controllable switch, such as a relay. The second switch 36 may be, for example, a single pole, single throw switch or relay. The second switch 36 has a first closed state and a second open state. Alternatively the second switch 36 may be a single pole, double throw switch or relay. Operation of the second switch 36, in the form of either a single pole, single throw switch or single pole, double throw switch, may be substantially the same as described above for the operation of the first switch 22.

The controller is further configured to receive the outputs 26-1, 26-2, 26-3 and 26-4 from the power supply measurement device 44, fluid level measurement device 46, fluid flow rate measurement device 48 and ambient temperature measurement device 50 respectively, and may control the state of the first switch dependent on the outputs 26-1, 26-2, 26-3 and 26-4, to facilitate the provision of electrical power to the oxyhydrogen gas generator 12 when the first switch is in the first state and to facilitate the prevention of the provision of electrical power to the oxyhydrogen gas generator when in the second state.

For example, in order to switch the first switch 22 to a first state to facilitate the provision of electrical power to the oxyhydrogen gas generator 12, each of the power supply measurement device 44, fluid level measurement device 46, fluid flow rate measurement device 48 and ambient temperature measurement device 50 output a first value to the controller 24. If any of the outputs 26-1, 26-2, 26-3, 26-4 from the power supply measurement device 44, fluid level measurement device 46, fluid flow rate measurement device 48 and ambient temperature measurement device 50, to the controller, are of a second value then the controller controls the first switch 22 to switch the first switch 22 to a second state to prevent the provision of electrical power to the oxyhydrogen gas generator 12.

A second fluid temperature measurement device 54 may be configured to measure a second fluid temperature by measurement of a second fluid temperature parameter of a fluid being supplied or to be supplied to the oxyhydrogen gas generator 12. The second fluid temperature measurement device 54 may be configured to provide an output 26-6, dependent on the second fluid temperature parameter. The controller 24 may be configured to receive the output 26-6 from the second fluid temperature measurement device 54, the received output 26-6 being dependent on the measurement of the second fluid temperature parameter of the fluid.

The controller 24 may control the state of the third switch 22 based, at least in part, on the output 26-6. The second fluid temperature parameter may be compared to a single second fluid temperature threshold. Alternatively, multiple second fluid temperature thresholds may be provided relating to different second fluid temperatures. The multiple second fluid temperature thresholds may provide a number of discrete second fluid temperature thresholds relating to different second fluid temperatures of a fluid being supplied or to be supplied to the oxyhydrogen gas generator 12. The multiple second fluid temperature thresholds may be used to provide an element of hysteresis in the system to prevent rapid switching of the output 26-6.

Above the single second fluid temperature threshold, or above one of the one or more multiple second fluid temperature thresholds, the output 26-6 may have a first value and below the single second fluid temperature threshold, or below another one of the one or more multiple second fluid temperature thresholds, the output 26-6 may have a second value.

The second fluid temperature measurement device 54 may be, or may comprise, a temperature sensor such as a thermocouple or thermistor. The second fluid temperature measurement device 54 may be configured to provide an output 26-6, with or without hysteresis. The hysteresis may minimize or prevent rapid switching of the first switch 22. The second fluid temperature measurement device 54 may provide or determine a time averaged second fluid temperature measurement. Alternatively, the controller 24 may determine, from output 26-6, an average second fluid temperature measurement over a determined time period. The time averaged second fluid temperature measurement may minimise or prevent rapid switching of the third switch 40.

The second fluid temperature measurement device 54 may be positioned or located downstream of the heater 38 in the fluid circulation path of the oxyhydrogen gas generator system 10. That is, the second fluid temperature measurement device 54 may be positioned downstream relative to the first direction 60 of the circulation of fluid, from the fluid supply 61 at the vessel 62. The second fluid temperature measurement device 54 may be positioned or located within the fluid, such that it may take a direct measurement of the fluid, or external to a portion of passageway 58, such as a portion of pipe or tube carrying the fluid, such that it may take an indirect measurement of the fluid.

The second fluid temperature measurement device 54 may be affixed to the exterior of the passageway 58 using a cable tie, tie wrap, worm clip or other fixing methods, arrangements or means, or alternatively adhered to the exterior of the passageway 58 using an adhesive such as cyanoacrylate. Alternatively, the second fluid temperature measurement device 54 may be affixed to the housing or casing of the heater 38 by any of the abovementioned methods. The second fluid temperature parameter threshold may be set in the range of 40°C to 70°C, in the range 50°C to 60°C. The second fluid temperature parameter threshold may be 55°C.

In one example, the second fluid temperature measurement device 54, comprising a temperature sensor, may be configured to measure a second fluid temperature parameter of a fluid being supplied or to be supplied to the oxyhydrogen gas generator 12. The second fluid temperature parameter threshold may be a threshold between 50°C and 60°C. For example, the second fluid temperature parameter threshold may be 55°C. If the measured second fluid temperature is above 55°C then the output 26-6 may be a first value. If the measured second fluid temperature is below 55°C then the output 26-6 may be a second value.

The controller 24 may be configured to control the third switch 40 dependent, at least in part, on the value of the output 26-6. If the output 26-6 is a first value then the controller 24 may control the third switch 40 to be in a first state to facilitate the provision of electrical power to a cooler 42 (which may also be referred to as cooling means in some examples). If the output 26-6 is a second value then the controller 24 may control the third switch 40 to be in a second state to prevent the provision of electrical power to the cooler 42.

In an alternative example, if multiple second fluid temperature parameter thresholds are provided then the output 26-6 may provide a first value when the measured second fluid temperature rises above a first of the multiple second fluid temperature thresholds, and not provide an output 26-6 at a second value until the measured second fluid temperature subsequently falls below a second of the multiple second fluid temperature thresholds.

For example the first of the multiple second fluid temperature parameter thresholds may be 55°C and the second of the multiple second fluid temperature threshold levels may be 40°C. The controller 24 may be configured to control the third switch 40 dependent, at least in part, on the value of the output 26-6. If the output 26-6 is a first value then the controller 24 may control the third switch 40 to be in a first state to facilitate the provision of electrical power to a cooler 42. If the output 26-6 is a second value then the controller 24 may control the third switch 40 to be in a second state to prevent the provision of electrical power to the cooler 42.

By the second fluid temperature measurement device 54 being configured to measure a second fluid temperature parameter of a fluid being supplied or to be supplied to the oxyhydrogen gas generator 12 with regards to multiple threshold levels, the system may be prevented from rapidly switching the output 26-6 between the first and second values, and thus may prevent rapid switching of the third switch 40.

The third switch 40 may be configured to facilitate the provision of electrical power to the cooler 42 when in the first state and to facilitate prevention of the provision of electrical power to the cooler 42 when in the second state. The third switch 40, which the controller 24 is configured to control, and which may form part of the oxyhydrogen gas generator control system 14 or be separate thereto, may be an electrically controllable switch, such as a relay. The third switch 40 may be, for example, a single pole, single throw switch or relay. The third switch 40 has a first closed state and a second open state. Alternatively the third switch 40 may be a single pole, double throw switch or relay. Operation of the third switch 40, may be substantially the same as described above for the operation of the first switch 22 and second switch 36.

The cooler 42, which may be comprised in or be separate to the oxyhydrogen gas generator control system 14, may be provided to facilitate cooling of the fluid circulating along the fluid circulation path and/or facilitate cooling of the ambient temperature of the air surrounding the oxyhydrogen gas generator 12 and/or other components of the oxyhydrogen gas generator system 10. The controller 24 may be configured to operate or control the cooler 42. In particular the controller 24 may be configured to operate or control the cooler 42 in response to receiving output 26-6 from the second fluid temperature measurement device 54. The cooler 42 may be configured to operate to transfer heat from a fluid in the fluid circulation path, when the measured second fluid temperature is above a second fluid temperature threshold. Where multiple second fluid temperature thresholds are provided, as previously described, the efficacy of the cooler 42 may be controlled to provide temperature control of the fluid, dependent on whether the one or more second fluid temperature thresholds are met or exceeded.

The cooler 42 may comprise a heat exchanger. The cooler 42 may comprise a thermoelectric heat pump, such as a Peltier cooing device, or a cyclic refrigeration unit or other suitable cooling arrangement. The cooler 42 may additionally or alternatively comprise a fan. The fan may operate to cool the fluid via convection.

To aid in cooling of the fluid, a radiator 68 may be provided. The radiator 68 may be in convective connection with the cooler 42. The radiator may be conductively connected to passageway 58, such as a pipe or tube, carrying the fluid for the oxyhydrogen gas generator 12. Alternatively, the fluid may pass through the radiator 68. The radiator 68 may be a containment vessel through which the fluid passes. The radiator 68 may form part of the fluid circulation path. The radiator 68 may further comprise fins on one or more outer surfaces to increase the surface area for heat exchange.

The cooler 42 provides the benefit of reducing the temperature of the fluid and/or the ambient temperature to a safe level, reducing the risk of damage to components of the oxyhydrogen gas generator system 10 and/or the risk of fire. The cooler 42 provides the benefit of bringing the temperature of the fluid to an optimal working temperature as previously described.

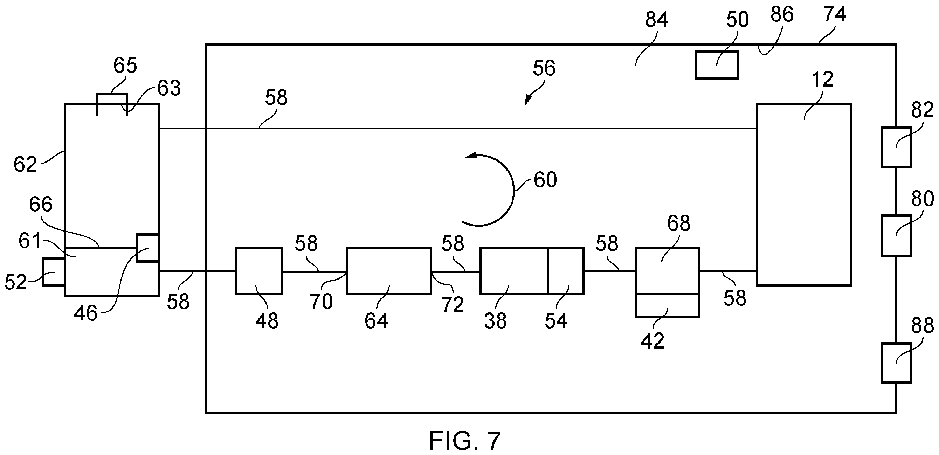

Fig. 7 illustrates an example fluid circulation system 56 according to various examples, in particular according to the example of Fig. 6. The fluid circulation system 56 may form part of the oxyhydrogen gas generator system 10. Features of the apparatus that are the same or similar as corresponding features in the apparatus that can be seen in Fig. 3, and described herein, are referenced by the same reference numerals.

The oxyhydrogen gas generator system 10 may comprise the fluid circulation system 56. The fluid circulation system 56 provides a fluid circulation path, for the circulation of the fluid from a fluid supply 61 in a vessel 62, in a first direction 60. Furthermore, the fluid from the vessel 62 may be carried or transported to the oxyhydrogen gas generator 12, such that the fluid is present at the oxyhydrogen gas generator 12, to facilitate the production of hydrogen and oxygen gas via a process of electrolysis. Thus the vessel 62 and the oxyhydrogen gas generator 12 describe two points in the fluid circulation path.

The fluid supply 61 may be contained in a vessel 62, such as a fluid tank or reservoir, and be operationally connected to, or associated with, the oxyhydrogen gas generator 12, such that fluid from the vessel 62 may be passed or transported to, or through, the oxyhydrogen gas generator 12. In this example the first fluid temperature measurement device 52 is located at the vessel 62, for monitoring the fluid temperature at the vessel 62. The first fluid temperature measurement device 52 is located at a position at or below a minimum operative level 66 of the fluid to measure a temperature relating to the temperature of the fluid.

A pump 64, or similar device, can be used or may be configured to extract the fluid from the vessel 62 and facilitate the carriage or passage of fluid from the vessel 62 to the oxyhydrogen gas generator 12. Extraction of fluid from the vessel 62 to the pump 64 could be facilitated by positioning an extraction tube or pipe, provided by structured passageways 58, below the minimum operative level 66 of the fluid in the vessel 62. The vessel 62 and pump 64 may form a gravity fed system. The pump 64 or similar device may be controlled by the controller 24. The controller 24 may be configured to operate or control the pump 64. The pump 64 or similar device may only be operational when the fluid level in the vessel 62 is detected to be above a minimum threshold level corresponding to the minimum operative level 66.

Between the vessel 62 and the pump 64 is a fluid flow measurement device 48 for measuring a fluid flow from the vessel 62 in the fluid circulation system 56, brought about by the operation of the pump 64. Alternatively, the fluid flow measurement device 48 may be positioned elsewhere in the fluid circulation system 56.

The oxyhydrogen gas generator control system 14 may also comprise a delay relay. The delay relay is configured to bypass the fluid flow measurement device 48 for a period of time, for example 5 seconds, to allow circulation of fluid to begin on start up of the oxyhydrogen gas generator system 10 before the fluid flow measurement device 48 is operable. The pump 64 has an intake 70 connected to the passageway 58 leading from the vessel 62 via the fluid flow measurement device 48, and an outlet 72 connected to the passageway 58 leading to the oxyhydrogen gas generator 12 via further components as described below.

Fluid from the outlet 72 of the pump 64 passes via passageway 58 to a heater 38. The heater 38 may be operational if the temperature of the fluid monitored at the vessel 62 is below a threshold temperature as previously described. The heater 38 may be an inline heater such that fluid passes through the interior of the housing of the heater 38. A second fluid temperature measurement device 54 may be affixed to the exterior of the passageway 58 at the outlet of the heater 38 using a cable tie, tie wrap, worm clip or other fixing methods, arrangements or means, or alternatively adhered to the exterior of the passageway 58 using an adhesive such as cyanoacrylate. Alternatively, the second fluid temperature measurement device 54 may be affixed to the housing or casing of the heater 38, either by using a cable tie, tie wrap, worm clip, adhesive or other fixing methods, arrangements or means.

Fluid from the heater 38 passes or is transported to the oxyhydrogen gas generator via a radiator 68. The radiator 68 may comprise a chamber or series of interconnected chambers, with an inlet and an outlet for the fluid circulating in the fluid circulation system 56. The radiator 68 may have fins or other structured elements conductively connected to one or more of the outer surfaces of the radiator 68 to provide increased surface area for the exchange of heat from the fluid to the surrounding air. The radiator 68 may be formed of one or more of metal, plastic, elastomeric material, or other material, or combination thereof, which is chemically compatible with or chemically inert to the electrolyte solution, and in particular the potassium hydroxide solution.

A cooling device 42 may be configured to conduct or convect heat from the radiator 68 to the surrounding air to aid in the cooling of the fluid.

The fluid then passes, or is transported into the oxyhydrogen gas generator 12, where, via a process of electrolysis, hydrogen and oxygen gasses may be produced.

The oxyhydrogen gas generator 12, as illustrated in Fig. 8, may comprise plates 76. The plates 76 may be uncoated to minimize or avoid contamination of the fluid. The plates 76 may be formed of metal, such as titanium. Alternatively the plates 76 may be stainless steel, nickel or copper. A structure of spatially separated plates 76 is arranged to facilitate electrolysis. The plates 76 comprise alternative positive and negative plates. The positive plates may be of a thickness between 0.7 mm and 1.1 mm, or between 0.8 mm and 1.0 mm, or at 0.9 mm. The negative plates may be of a thickness between 0.4 mm and 0.8 mm, or between 0.5 mm and 0.7 mm, or at 0.6 mm. The plates 76 are separated from each other by a spacer or gasket 78. The gasket 78 may be between 2 mm and 3 mm thick. The gasket 78 may be 2.5 mm. The gasket may be formed of a non-conductive material. The gasket may be formed of plastic, elastomeric material, or other material, or combination thereof. The gasket may be chemically compatible with or chemically inert to the electrolyte solution, in particular the potassium hydroxide solution.

The hydrogen and oxygen gasses produced via electrolysis are passed, transported, or injected into the air intake of an engine, for example an internal combustion engine, which may be an engine which uses petrol (gasoline) or diesel as a fuel, whilst fluid may return via the passageways 58 of the fluid circulation system 56, back to the vessel 62.

In some examples, a user input control, which may be comprised in or be separate to the oxyhydrogen gas generator control system 14, may be provided and be configured to selectively control an electrical power supply as an electrical power input to the oxyhydrogen gas generator system 10. The user input control may be a vehicle ignition switch. The electrical power supply may be further configured to supply electrical power to an input of the first switch 22, or to other components of the oxyhydrogen gas generator system 10. The electrical power supply may be one or more of a battery, a fuel cell, a generator or an alternator.

As shown in Fig. 7, the oxyhydrogen gas generator system 10 may comprise an enclosure 74 for housing the one or more components of the oxyhydrogen gas generator system 10, including but not limited to the oxyhydrogen gas generator control system 14, the heater 38 and the oxyhydrogen gas generator 12. In some examples the vessel 62 containing the fluid supply 61 is not enclosed in the enclosure 74 so as to facilitate user access to the vessel 62. For example, a user may be required to add further water and/or electrolyte to the vessel 62 prior to, or during, operation.

The oxyhydrogen gas generator system 10, when housed in the enclosure 74, may be portable and interchangeable. By being portable, the enclosure 74 may be beneficially moved between vehicles to which it may be connected without significant difficulty for a user. The enclosure 74 may have a single electrical input connector 80 for connection to a power supply. The enclosure 74 may have a single gas outlet connector 82 for the passage of oxyhydrogen produced by the oxyhydrogen gas generator 12 to the air intake of an engine. The electrical input connector 80 and gas outlet connector 82 may be standard connections, such as a caravan plug and a quick release air coupling. Connection of the electrical input connector 80 and gas outlet connector 82 is simple and allows quick connection and removal of the oxyhydrogen gas generator system 10 at or within a vehicle 16. This provides the benefit of allowing a user to quickly exchange the oxyhydrogen gas generator system 10 for another oxyhydrogen gas generator system 10, or to move the oxyhydrogen gas generator system 10 between vehicles.

The ambient temperature measuring device 50, or a plurality of ambient temperature measuring devices 50, may be located within the enclosure 74. One or more of the ambient temperature measuring devices 50 may be located in an upper portion 84 of the interior of the enclosure 74. The interior of the enclosure may be coated or lined with lining 86. The lining 86 may be a heat resistant material to create a thermal blanket. The lining 86 may also provide sound proofing. The ambient temperature measurement device 50 may be configured to measure the ambient temperature within the enclosure 74 in which the one or more components of the oxyhydrogen gas generator system 10 is housed. The enclosure 74 comprises one or more vents, such that the enclosure 74 is ventilated to allow transfer of heat between the inside and outside of the enclosure 74. In order to facilitate heat transfer between the interior and exterior of the enclosure 74, the enclosure 74 has a series of ventilation apertures 88. A cooling fan 42 may be positioned close to the ventilation apertures 88 to aid in the exchange of heat from inside the enclosure 74 to outside the enclosure 74.

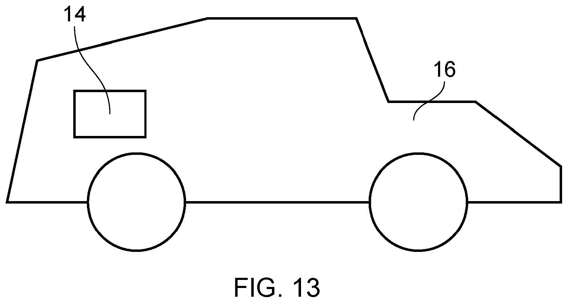

As shown in Fig. 13, a vehicle 16 may comprise the oxyhydrogen gas generator control system 14 and/or one or more of the other components of the oxyhydrogen gas generator system 10. The vehicle 16 may be any vehicle which comprises an engine.

The operation of the oxyhydrogen gas generator control system 14 is described in the following paragraphs with reference to Fig. 9.

At block 100, the controller 24 receives output from one or more measurement devices 20 as previously described. The received output 26 is dependent on the measurement of one or more parameters associated with the oxyhydrogen gas generator system 10.

At block 110, the controller 24 controls a first switch 22, to control the operation of the oxyhydrogen gas generator 12, dependent on the value of the one or more measured parameters. As mentioned in the preceding paragraphs the first switch 22 may be controlled to be in a first state, to facilitate the provision of electrical power to a first component of the oxyhydrogen gas generator system 10, when the value of each of the one or more measured parameters meet respective first criteria, and controlled to be in a second state, to facilitate prevention of the provision of electrical power to the first component of the oxyhydrogen gas generator system 10, when at least one of the one or more measured parameter values meets a respective second criteria.

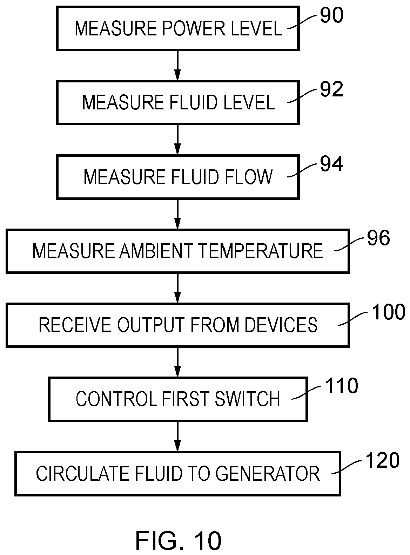

The operation of a first example oxyhydrogen gas generator control system 14 is described in the following paragraphs with reference to Fig. 10, where the first component of the oxyhydrogen gas generator system 10 is the oxyhydrogen gas generator 12.

One of the parameters associated with the oxyhydrogen gas generator system 10 may be a power level of a power supply, the power supply being configured to supply electrical power to the oxyhydrogen gas generator system 10. The respective first criteria for the power level requires the power level to be at or above a power level threshold and the respective second criteria for the power level requires the power level to be below the power level threshold. The power level threshold may be 14 Volts. The power consumption may be bounded, on a 12V battery, to a maximum current drain. The maximum current drain may be between 18A and 28A. The maximum current drain may be 25A.

At block 90, a power supply measurement device 44 measures the power level of the power supply, and provides an output 26-1 to the controller 24 dependent on a comparison between the measured power level and the power level threshold.

One of the parameters associated with the oxyhydrogen gas generator system 10 may be a fluid level of a fluid supply 61 for the oxyhydrogen gas generator system 10. The respective first criteria for the fluid level requires the fluid level to be at or above a fluid level threshold and the respective second criteria for the fluid level requires the fluid level to be below the fluid level threshold.

At block 92 a fluid level measurement device 46 measures the fluid level of a fluid in a fluid supply 61 for the oxyhydrogen gas generator system 10, and provides an output 26-2 to the controller 24 dependent on a comparison between the measured fluid level and the fluid level threshold.

One of the parameters associated with the oxyhydrogen gas generator system may be a fluid flow rate of a fluid from a fluid supply 61 for the oxyhydrogen gas generator system 10. The respective first criteria for the fluid flow rate requires the fluid flow rate to be at or above a fluid flow rate threshold and the respective second criteria for the fluid flow rate requires the fluid flow rate to be below the fluid flow rate threshold.

At block 94 a fluid flow rate measurement device 48 measures the fluid flow rate of a fluid from the fluid supply 61 for the oxyhydrogen gas generator system 10, and provides an output 26-3 to the controller 24 dependent on a comparison between the measured fluid flow rate and the fluid flow rate threshold.

One of the parameters associated with the oxyhydrogen gas generator system 10 may be an ambient temperature for the oxyhydrogen gas generator system 10 . The respective first criteria for the ambient temperature requires the ambient temperature to be at or below an ambient temperature threshold and the respective second criteria for the ambient temperature requires the ambient temperature to be above the ambient temperature threshold.

At block 96 an ambient temperature measurement device 50 measures the ambient temperature for the oxyhydrogen gas generator system 10, and provides an output 26-4 to the controller 24 dependent on a comparison between the measured ambient temperature and the ambient temperature threshold.

At block 100, the controller 24 receives output 26 from the one or more measurement devices 20. The received output 26 is dependent on the measurement of the one or more parameters associated with the oxyhydrogen gas generator system 10.

At block 110, the controller 24 controls a first switch 22, to control the operation of the oxyhydrogen gas generator 12, dependent on the value of the one or more measured parameters. As mentioned in the preceding paragraphs the first switch 22 may be controlled to be in a first state, to facilitate the provision of electrical power to a first component of the oxyhydrogen gas generator system 10, when the value of each of the one or more measured parameters meet respective first criteria, and controlled to be in a second state, to facilitate prevention of the provision of electrical power to the first component of the oxyhydrogen gas generator system 10, when at least one of the one or more measured parameter values meets a respective second criteria.

At block 120, the fluid is circulated to the oxyhydrogen gas generator 12 for a process of electrolysis at the oxyhydrogen gas generator 12.

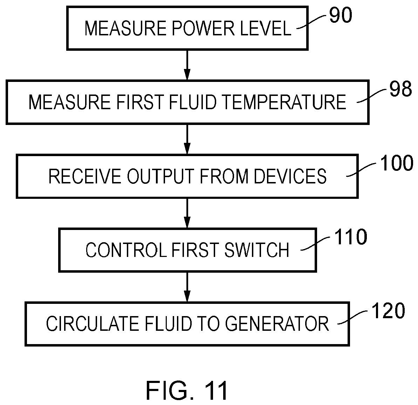

The operation of a second example oxyhydrogen gas generator control system 14 is described in the following paragraphs with reference to Fig. 11, where the first component of the oxyhydrogen gas generator system 10 is a heater 38 for heating a fluid in a fluid circulation path of the oxyhydrogen gas generator system 10.

One of the parameters associated with the oxyhydrogen gas generator system 10 may be a power level of a power supply, the power supply being configured to supply electrical power to the oxyhydrogen gas generator system 10. The respective first criteria for the power level requires the power level to be at or above a power level threshold and the respective second criteria for the power level requires the power level to be below the power level threshold. The power level threshold may be 14 Volts. The power consumption may be bounded, on a 12V battery, to a maximum current drain. The maximum current drain may be between 18A and 28A. The maximum current drain may be 25A.

At block 90, a power supply measurement device 44 measures the power level of the power supply, and provides an output 26-1 to the controller 24 dependent on a comparison between the measured power level and the power level threshold.

One of the parameters associated with the oxyhydrogen gas generator system 10 may be a first fluid temperature measured at a first position in a fluid circulation path of the oxyhydrogen gas generator system 10. The respective first criteria for the first fluid temperature requires the first fluid temperature to be at or below a first fluid temperature threshold and the respective second criteria for the first fluid temperature requires the first fluid temperature to be above the first fluid temperature threshold.

At block 98 a first fluid temperature measurement device 52 measures the first fluid temperature in the fluid circulation path of the oxyhydrogen gas generator system 10, and provides an output 26-5 to the controller 24 dependent on a comparison between the measured first fluid temperature and the first fluid temperature threshold, wherein the first fluid temperature threshold is of a value between 30°C and 70°C, or between 40°C and 50°C. The first fluid temperature threshold may be 40°C.

At block 100, the controller 24 receives output from the one or more measurement devices 20. The received output 26 is dependent on the measurement of the one or more parameters associated with the oxyhydrogen gas generator system 10.

At block 110, the controller 24 controls a first switch 22, to control the operation of the oxyhydrogen gas generator 12, dependent on the value of the one or more measured parameters. As mentioned in the preceding paragraphs the first switch 22 may be controlled to be in a first state, to facilitate the provision of electrical power to the heater 38, when the value of each of the one or more measured parameters meet respective first criteria, and controlled to be in a second state, to facilitate prevention of the provision of electrical power to the heater 38, when at least one of the one or more measured parameter values meets a respective second criteria. When electrical power is provided to the heater 38 then the fluid passing through a housing of the heater 38 is heated.

At block 120, the fluid is circulated to the oxyhydrogen gas generator 12 for a process of electrolysis at the oxyhydrogen gas generator 12.

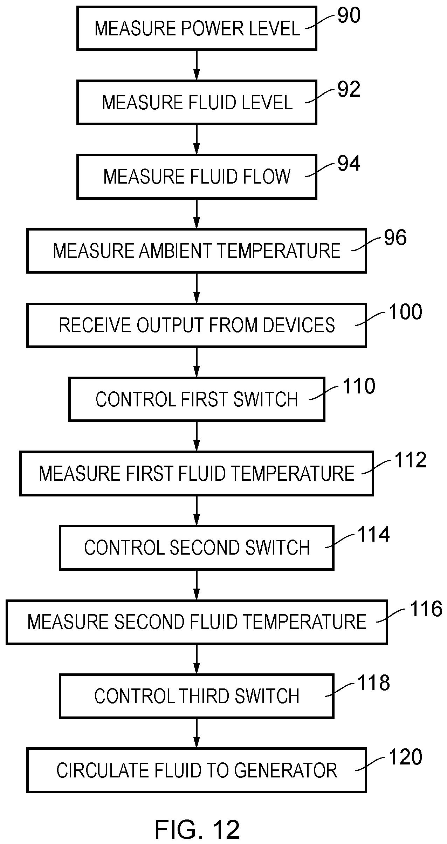

The operation of a third example oxyhydrogen gas generator control system 14 is described in the following paragraphs with reference to Fig. 12, where the first component of the oxyhydrogen gas generator system is the oxyhydrogen gas generator 12.

One of the parameters associated with the oxyhydrogen gas generator system 10 may be a power level of a power supply, the power supply being configured to supply electrical power to the oxyhydrogen gas generator system 10. The respective first criteria for the power level requires the power level to be at or above a power level threshold and the respective second criteria for the power level requires the power level to be below the power level threshold. The power level threshold may be 14 Volts. The power consumption may be bounded, on a 12V battery, to a maximum current drain. The maximum current drain may be between 18A and 28 A. The maximum current drain may be 25A.

At block 90, a power supply measurement device 44 measures the power level of the power supply, and provides an output 26-1 to the controller 24 dependent on a comparison between the measured power level and the power level threshold.

One of the parameters associated with the oxyhydrogen gas generator system 10 may be a fluid level of a fluid supply 61 for the oxyhydrogen gas generator system 10. The respective first criteria for the fluid level requires the fluid level to be at or above a fluid level threshold and the respective second criteria for the fluid level requires the fluid level to be below the fluid level threshold.

At block 92 a fluid level measurement device 46 measures the fluid level of a fluid in a fluid supply 61 for the oxyhydrogen gas generator system 10, and provides an output 26-2 to the controller 24 dependent on a comparison between the measured fluid level and the fluid level threshold.

One of the parameters associated with the oxyhydrogen gas generator system may be a fluid flow rate of a fluid from a fluid supply 61 for the oxyhydrogen gas generator system 10. The respective first criteria for the fluid flow rate requires the fluid flow rate to be at or above a fluid flow rate threshold and the respective second criteria for the fluid flow rate requires the fluid flow rate to be below the fluid flow rate threshold.

At block 94 a fluid flow rate measurement device 48 measures the fluid flow rate of a fluid from a fluid supply 61 for the oxyhydrogen gas generator system 10, and provides an output 26-3 to the controller 24 dependent on a comparison between the measured fluid flow rate and the fluid flow rate threshold.

One of the parameters associated with the oxyhydrogen gas generator system 10 may be an ambient temperature for the oxyhydrogen gas generator system 10. The respective first criteria for the ambient temperature requires the ambient temperature to be at or below an ambient temperature threshold and the respective second criteria for the ambient temperature requires the ambient temperature to be above the ambient temperature threshold.

At block 96 an ambient temperature measurement device 50 measures the ambient temperature for the oxyhydrogen gas generator system 10, and provides an output 26-4 to the controller 24 dependent on a comparison between the measured ambient temperature and the ambient temperature threshold.

At block 100, the controller 24 receives output 26 from the one or more measurement devices 20. The received output 26 is dependent on the measurement of the one or more parameters associated with the oxyhydrogen gas generator system 10.

At block 110, the controller 24 controls a first switch 22, to control the operation of the oxyhydrogen gas generator 12, dependent on the value of the one or more measured parameters. As mentioned in the preceding paragraphs the first switch 22 may be controlled to be in a first state, to facilitate the provision of electrical power to a first component of the oxyhydrogen gas generator system 10, when the value of each of the one or more measured parameters meet respective first criteria, and controlled to be in a second state, to facilitate prevention of the provision of electrical power to the first component of the oxyhydrogen gas generator system 10, when at least one of the one or more measured parameter values meets a respective second criteria.

One of the parameters associated with the oxyhydrogen gas generator system may be a first fluid temperature measured at a first position in a fluid circulation path of the oxyhydrogen gas generator system 10. The respective first criteria for the first fluid temperature requires the first fluid temperature to be at or below a first fluid temperature threshold and the respective second criteria for the first fluid temperature requires the first fluid temperature to be above the first fluid temperature threshold.

At block 112, a first fluid temperature measurement device 52 measures the first fluid temperature in the fluid circulation path of the oxyhydrogen gas generator system 10, and provides an output 26-5 to the controller 24 dependent on a comparison between the measured first fluid temperature and the first fluid temperature threshold, wherein the first fluid temperature threshold is of a value between 30°C and 70°C, or between 40°C and 50°C. The first fluid temperature threshold may be 40°C.

At block 114, the controller 24 controls a second switch, having a first state and a second state, to control the operation of the oxyhydrogen gas generator 12. The second switch 36 is controlled to be in the first state, to facilitate the provision of electrical power to a heater 38 for heating a fluid in a fluid circulation path of the oxyhydrogen gas generator system 10, when the value of the first fluid temperature measured at a first position in the fluid circulation path of the oxyhydrogen gas generator system 10 is at or below a first fluid temperature threshold. The second switch 36 is controlled to be in the second state, to facilitate prevention of the provision of electrical power to the heater 38, when the value of the first fluid temperature measured at the first position in the fluid circulation path of the oxyhydrogen gas generator system 10 is above the first fluid temperature threshold. When electrical power is provided to the heater 38 then the fluid passing through a housing of the heater 38 is heated.

At block 116 a second fluid temperature measurement device 54 measures a second fluid temperature at a second position in the fluid circulation path of the oxyhydrogen gas generator system 10, and provides an output 26-6 to the controller 24 dependent on a comparison between the measured second fluid temperature and the second fluid temperature threshold, wherein the second fluid temperature threshold is of a value between 40°C and 70°C, or between 50°C and 60°C. The second fluid temperature threshold may be 55°C. The second position may be different from the first position and may be downstream of the heater 38 in the fluid circulation path of the oxyhydrogen gas generator system 10.

At block 118, the controller 24 controls a cooler 42, the cooler 42 being configured to operate to transfer heat from a fluid in the fluid circulation path when the measured second fluid temperature is above the second fluid temperature threshold.

Heat may be transferred from the fluid in the fluid circulation path to the surrounding air, at least in part, by conduction, and additionally or alternatively may be transferred, at least in part, by convection. The convection may be actuated by a fan which forms at least part of the cooler 42.

At block 120, the fluid is circulated to the oxyhydrogen gas generator for a process of electrolysis at the oxyhydrogen gas generator 12.

Further to the blocks described above in relation to examples of embodiments of the invention, the method may also comprise selectively providing an electrical power supply as an electrical input to the oxyhydrogen gas generator system 10 in response to a user input, and providing the electrical power supply as an electrical input for the first switch 22.

Current applied to the plates 76 of the oxyhydrogen gas generator 12 in an electrolysis process may then produce hydrogen and oxygen gasses. The hydrogen and oxygen gasses may then be passed into the air intake of an associated engine.

The blocks illustrated in Figs. 9, 10, 11 and 12 may represent steps in a method and/or sections of code in the computer program 32. The illustration of a particular order to the blocks does not necessarily imply that there is a required or preferred order for the blocks and the order and arrangement of the block may be varied. Furthermore, it may be possible for some steps to be omitted.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A method for control of an oxyhydrogen gas generator (12) in an oxyhydrogen gas generator system (10), the method comprising:
receiving (100) output (26) from one or more measurement devices (20), the received output (26) being dependent on the measurement of one or more parameters associated with the oxyhydrogen gas generator system (10); and
controlling (114) a switch (36), to control the operation of the oxyhydrogen gas generator (12), dependent on the value of the one or more measured parameters, the switch (36) having a first state and a second state,
wherein controlling (114) the switch (36) comprises:
controlling (114) the switch (36) to be in the first state, to facilitate the provision of electrical power to a heater (38) configured to heat a fluid in a fluid circulation path of the oxyhydrogen gas generator system (10) which is conveyed to the oxyhydrogen gas generator (12), when a first fluid temperature measured at a first position in the fluid circulation path of the oxyhydrogen gas generator system (10) is at or below a first fluid temperature threshold; and
controlling (114) the switch (36) to be in the second state, to facilitate prevention of the provision of electrical power to the heater (38), when the first fluid temperature is above the first fluid temperature threshold.

2. A method according to claim 1, further comprising measuring (112), at a first fluid temperature measurement device (52), the first fluid temperature in the fluid circulation path of the oxyhydrogen gas generator system (10), and providing an output (26-5) to a controller (24) dependent on a comparison between the measured first fluid temperature and the first fluid temperature threshold.

3. A method according to claim 1 or claim 2, further comprising:
controlling (110) a further switch (22) to be in a first state, to facilitate the provision of electrical power to the oxyhydrogen gas generator (12), when an ambient temperature of the oxyhydrogen gas generator system (10) is at or below an ambient temperature threshold; and
controlling (110) the further switch (22) to be in a second state, to facilitate prevention of the provision of electrical power to the oxyhydrogen gas generator (12), when the ambient temperature is above the ambient temperature threshold.

4. A method according to claim 1 or claim 2, further comprising: controlling (110) a further switch (22) to be in a first state, to facilitate the provision of electrical power to the oxyhydrogen gas generator (12), wherein the further switch is controlled to be in the first state when each of one or more of:
- an ambient temperature of the oxyhydrogen gas generator system (10) is at or below an ambient temperature threshold;
- a power level of a power supply configured to supply electrical power to the oxyhydrogen gas generator system (10) is at or above a power level threshold;
- a fluid level of a fluid supply (61) for the oxyhydrogen gas generator system (10) is at or above a fluid level threshold; and
- a fluid flow rate of a fluid supply for the oxyhydrogen gas generator system (10) is at or above a fluid flow rate threshold,
is met
and the further switch is controlled to be in the second state when one or more of: H
- an ambient temperature of the oxyhydrogen gas generator system (10) is above the ambient temperature threshold;
- a power level of a power supply configured to supply electrical power to the oxyhydrogen gas generator system (10) is below the power level threshold;
- a fluid level of a fluid supply (61) for the oxyhydrogen gas generator system (10) is below the fluid level threshold; and
- a fluid flow rate of a fluid supply for the oxyhydrogen gas generator system (10) is below the fluid flow rate threshold
is met.

5. A method according to claim 3 or claim 4, further comprising measuring (96), at an ambient temperature measurement device (50), the ambient temperature for the oxyhydrogen gas generator system (10), and providing an output (26-4) to a controller (24) dependent on a comparison between the measured ambient temperature and the ambient temperature threshold.

6. A method according to claim 5, wherein the first fluid temperature threshold is of a value between 40°C and 50°C and the ambient temperature threshold is of a value between 60°C and 70°C.

7. A method according to any preceding claim, further comprising:
measuring (116) a second fluid temperature at a second position in the fluid circulation path of the oxyhydrogen gas generator system (10); and
controlling a cooler (42) configured to operate to transfer heat from a fluid in the fluid circulation path when the measured second fluid temperature is above a second fluid temperature threshold.

8. A method according to claim 7, wherein the second fluid temperature threshold is of a value between 50°C and 60°C.

9. A method according to any preceding claim, further comprising circulating (120) a fluid to the oxyhydrogen gas generator (12) for a process of electrolysis at the oxyhydrogen gas generator (12), wherein the fluid is a solution comprising distilled water and an electrolyte, wherein the electrolyte is potassium hydroxide of a purity of between 90% and 100%, and wherein the potassium hydroxide is provided in the solution in a range from 0.5g per litre of distilled water to 1.2g per litre of distilled water.

10. An oxyhydrogen gas generator control system (14) for control of an oxyhydrogen gas generator (12) in an oxyhydrogen gas generator system (10), the oxyhydrogen gas generator control system (14) comprising:
a controller (24) configured to receive output (26) from one or more measurement devices (20), the received output being dependent on the measurement of one or more parameters associated with the oxyhydrogen gas generator system (10), the controller (24) being further configured to control a switch (36), to control the operation of the oxyhydrogen gas generator (12), dependent on the value of the one or more measured parameters, the switch (36) having a first state and a second state,
wherein the switch (36) is configured to facilitate the provision of electrical power to a heater (38) configured to heat a fluid in a fluid circulation path of the oxyhydrogen gas generator system (10) which is conveyed to the oxyhydrogen gas generator (12) when in the first state and to facilitate prevention of the provision of electrical power to the heater (38) when in the second state,
wherein the switch (36) is controlled to be in the first state when a first fluid temperature measured at a first position in the fluid circulation path of the oxyhydrogen gas generator system (10) is at or below a first fluid temperature threshold, and the switch (36) is controlled to be in the second state when the first fluid temperature is above the first fluid temperature threshold.

11. An oxyhydrogen gas generator control system (14) according to claim 10, wherein one of the one or more measurement devices (20) is a first fluid temperature measurement device (52) configured to measure a first fluid temperature parameter of a fluid to be supplied to the oxyhydrogen gas generator (12), and configured to provide an output (26-5), dependent on the first fluid temperature parameter, which, at least in part, controls the state of the switch (36).

12. An oxyhydrogen gas generator control system (14) according to claim 10 or claim 11, wherein the controller (24) is further configured to:
receive output (26-4) from an ambient temperature measurement device (50) configured to measure an ambient temperature of the air surrounding the oxyhydrogen gas generator (12), and configured to provide an output, dependent on the ambient temperature, which, at least in part, controls a state of a further switch (22);
control the further switch (22) to be in a first state, to facilitate the provision of electrical power to the oxyhydrogen gas generator (12), when the ambient temperature of the oxyhydrogen gas generator system (10) is at or below an ambient temperature threshold; and
control the further switch (22) to be in a second state, to facilitate prevention of the provision of electrical power to the oxyhydrogen gas generator (12), when the ambient temperature is above the ambient temperature threshold.

13. An oxyhydrogen gas generator control system (14) according to claim 12, wherein the controller (24) is further configured to control the state of the further switch (22) in response to an output (26-1, 26-2, 26-3) of one or more of: a power supply measurement device (44) configured to measure a power consumption level parameter of an electrical power supply; a fluid level measurement device (46) configured to measure a fluid level parameter of a fluid supply (61) for the oxyhydrogen gas generator system (10); and a fluid flow rate measurement device (48) configured to measure a fluid flow rate parameter of a fluid being supplied to the oxyhydrogen gas generator (12).

14. An oxyhydrogen gas generator control system (14) according to any preceding claim, wherein the controller (24) is configured to:
receive output (26-6) from a second fluid temperature measurement device (54), the received output (26-6) being dependent on the measurement of a second fluid temperature parameter of the fluid, which fluid is to be supplied to the oxyhydrogen gas generator (12); and
operate a cooler (42), the cooler (42) configured to operate to transfer heat from a fluid in the fluid circulation path, when the measured second fluid temperature is above a second fluid temperature threshold.

15. A computer program (32) comprising computer program instructions to cause the oxyhydrogen gas generator control system (14) of claim 10 to execute the steps of the method of any one of claims 1 to 9.

## Patentansprüche

1. Verfahren zur Steuerung eines Knallgasgenerators (12) in einem Knallgasgeneratorsystem (10), wobei das Verfahren umfasst:
Empfangen (100) einer Ausgabe (26) von einem oder mehreren Messgeräten (20), wobei die empfangene Ausgabe (26) von der Messung eines oder mehrerer Parameter abhängig ist, die dem Knallgasgeneratorsystem (10) zugeordnet sind; und
Steuern (114) eines Schalters (36), um den Betrieb des Knallgasgenerators (12) zu steuern, abhängig von dem Wert des einen oder der mehreren gemessenen Parameter, wobei der Schalter (36) einen ersten Zustand und einen zweiten Zustand aufweist,
wobei das Steuern (114) des Schalters (36) umfasst:
Steuern (114) des Schalters (36) derart, dass er sich im ersten Zustand befindet, um die Versorgung eines Heizgeräts (38) mit elektrischer Energie zu ermöglichen, das dazu konfiguriert ist, ein Fluid in einem Fluidzirkulationspfad des Knallgasgeneratorsystems (10) zu erhitzen, das zum Knallgasgenerator (12) geleitet wird, wenn eine an einer ersten Position im Fluidzirkulationspfad des Knallgasgeneratorsystems (10) gemessene erste Fluidtemperatur bei oder unter einem ersten Fluidtemperaturschwellenwert liegt; und
Steuern (114) des Schalters (36) derart, dass er sich im zweiten Zustand befindet, um die Verhinderung der Versorgung des Heizgeräts (38) mit elektrischer Energie zu ermöglichen, wenn die erste Fluidtemperatur über dem ersten Fluidtemperaturschwellenwert liegt.

2. Verfahren nach Anspruch 1, ferner umfassend das Messen (112), an einem ersten Fluidtemperaturmessgerät (52), der ersten Fluidtemperatur im Fluidzirkulationspfad des Knallgasgeneratorsystems (10) und das Bereitstellen einer Ausgabe (26-5) an ein Steuergerät (24) abhängig von einem Vergleich zwischen der gemessenen ersten Fluidtemperatur und dem ersten Fluidtemperaturschwellenwert.

3. Verfahren nach Anspruch 1 oder 2, ferner umfassend:
Steuern (110) eines weiteren Schalters (22) derart, dass er sich in einem ersten Zustand befindet, um die Versorgung des Knallgasgenerators (12) mit elektrischer Energie zu ermöglichen, wenn eine Umgebungstemperatur des Knallgasgeneratorsystems (10) bei oder unter einem Umgebungstemperaturschwellenwert liegt; und
Steuern (110) des weiteren Schalters (22) derart, dass er sich in einem zweiten Zustand befindet, um die Verhinderung der Versorgung des Knallgasgenerator (12) mit elektrischer Energie zu ermöglichen, wenn die Umgebungstemperatur über dem Umgebungstemperaturschwellenwert liegt.

4. Verfahren nach Anspruch 1 oder Anspruch 2, ferner umfassend: Steuern (110) eines
weiteren Schalters (22) derart, dass er sich in einem ersten Zustand befindet, um die Versorgung des Knallgasgenerators (12) mit elektrischer Energie zu ermöglichen, wobei der weitere Schalter so gesteuert wird, dass er sich in dem ersten Zustand befindet, wenn eines oder mehrere von:
- eine Umgebungstemperatur des Knallgasgeneratorsystems (10) liegt bei oder unter einem Umgebungstemperaturschwellenwert;
- ein Energiepegel einer Energieversorgung, die dazu konfiguriert ist, das Knallgasgeneratorsystem (10) mit elektrischer Energie zu versorgen, liegt bei oder über einem Energiepegelschwellenwert;
- ein Fluidpegel einer Fluidversorgung (61) für das Knallgasgeneratorsystem (10) liegt bei oder über einem Fluidpegelschwellenwert; und
- eine Fluidströmungsrate einer Fluidversorgung für das Knallgasgeneratorsystem (10) liegt bei oder über einem Fluidströmungsratenschwellenwert, erfüllt sind,
und der weitere Schalter so gesteuert wird, dass er sich im zweiten Zustand befindet, wenn eines oder mehrere von:
- eine Umgebungstemperatur des Knallgasgeneratorsystems (10) liegt über dem Umgebungstem peraturschwellenwert;
- ein Energiepegel einer Energieversorgung, die dazu konfiguriert ist, das Knallgasgeneratorsystem (10) mit elektrischer Energie zu versorgen, liegt unter dem Energiepegelschwellenwert;
- ein Fluidpegel einer Fluidversorgung (61) für das Knallgasgeneratorsystem (10) liegt unter dem Fluidpegelschwellenwert; und
- eine Fluiddurchflussmenge einer Fluidversorgung für das Knallgasgeneratorsystem (10) liegt unter dem Fluiddurchflussmengenschwellenwert, erfüllt sind.

5. Verfahren nach Anspruch 3 oder Anspruch 4, ferner umfassend das Messen (96), an einem Umgebungstemperaturmessgerät (50), der Umgebungstemperatur für das Knallgasgeneratorsystem (10), und das Bereitstellen einer Ausgabe (26-4) an ein Steuergerät (24) abhängig von einem Vergleich zwischen der gemessenen Umgebungstemperatur und dem Umgebungstemperaturschwellenwert.

6. Verfahren nach Anspruch 5, wobei der erste Fluidtemperaturschwellenwert einen Wert zwischen 40°C und 50°C und der Umgebungstemperaturschwellenwert einen Wert zwischen 60°C und 70°C aufweist.

7. Verfahren nach einem der vorhergehenden Ansprüche, ferner umfassend:
Messen (116) einer zweiten Fluidtemperatur an einer zweiten Position im Fluidzirkulationspfad des Knallgasgeneratorsystems (10); und
Steuern eines Kühlers (42), der dazu konfiguriert ist, so zu arbeiten, dass er Wärme von einem Fluid im Fluidzirkulationspfad überträgt, wenn die gemessene zweite Fluidtemperatur über einem zweiten Fluidtemperaturschwellenwert liegt.

8. Verfahren nach Anspruch 7, wobei der zweite Fluidtemperaturschwellenwert einen Wert zwischen 50°C und 60°C aufweist.

9. Verfahren nach einem der vorhergehenden Ansprüche, ferner umfassend das Zirkulieren-lassen (120) eines Fluids zum Knallgasgenerator (12) für einen Elektrolyseprozess am Knallgasgenerator (12), wobei das Fluid eine Lösung ist, die destilliertes Wasser und einen Elektrolyten umfasst, wobei der Elektrolyt Kaliumhydroxid mit einer Reinheit zwischen 90 % und 100 % ist und wobei das Kaliumhydroxid in der Lösung in einem Bereich von 0,5 g pro Liter destilliertem Wasser bis 1,2 g pro Liter destilliertem Wasser bereitgestellt ist.

10. Knallgasgenerator-Steuersystem (14) zur Steuerung eines Knallgasgenerators (12) in einem Knallgasgeneratorsystem (10), wobei das Knallgasgenerator-Steuersystem (14) umfasst:
ein Steuergerät (24), das dazu konfiguriert ist, eine Ausgabe (26) von einem oder mehreren Messgeräten (20) zu empfangen, wobei die empfangene Ausgabe von der Messung eines oder mehrerer Parameter abhängig ist, die dem Knallgasgeneratorsystem (10) zugeordnet sind, wobei das Steuergerät (24) ferner dazu konfiguriert ist, einen Schalter (36) zu steuern, um den Betrieb des Knallgasgenerators (12) abhängig von dem Wert des einen oder der mehreren gemessenen Parameter zu steuern, wobei der Schalter (36) einen ersten Zustand und einen zweiten Zustand aufweist,
wobei der Schalter (36) dazu konfiguriert ist, die Versorgung eines Heizgeräts (38) mit elektrischer Energie zu ermöglichen, das dazu konfiguriert ist, ein Fluid in einem Fluidzirkulationspfad des Knallgasgeneratorsystems (10) zu erhitzen, das zu dem Knallgasgenerator (12) geleitet wird, wenn er sich im ersten Zustand befindet, und die Verhinderung der Versorgung des Heizgeräts (38) mit elektrischer Energie zu ermöglichen, wenn er sich im zweiten Zustand befindet,
wobei der Schalter (36) so gesteuert wird, dass er sich im ersten Zustand befindet, wenn eine an einer ersten Position im Fluidzirkulationspfad des Knallgasgeneratorsystems (10) gemessene erste Fluidtemperatur bei oder unter einem ersten Fluidtemperaturschwellenwert liegt, und der Schalter (36) so gesteuert wird, dass er sich im zweiten Zustand befindet, wenn die erste Fluidtemperatur über dem ersten Fluidtemperaturschwellenwert liegt.

11. Knallgasgenerator-Steuersystem (14) nach Anspruch 10, wobei eines von dem einen oder den mehreren Messgeräten (20) ein erstes Fluidtemperaturmessgerät (52) ist, das dazu konfiguriert ist, einen ersten Fluidtemperaturparameter eines dem Knallgasgenerator (12) zuzuführenden Fluids zu messen, und dazu konfiguriert ist, abhängig von dem ersten Fluidtemperaturparameter eine Ausgabe (26-5) bereitzustellen, die zumindest teilweise den Zustand des Schalters (36) steuert.

12. Knallgasgenerator-Steuersystem (14) nach Anspruch 10 oder Anspruch 11, wobei das Steuergerät (24) ferner konfiguriert ist zum:
Empfangen einer Ausgabe (26-4) von einem Umgebungstemperaturmessgerät (50), das dazu konfiguriert ist, eine Umgebungstemperatur der den Knallgasgenerator (12) umgebenden Luft zu messen, und dazu konfiguriert ist, abhängig von der Umgebungstemperatur eine Ausgabe bereitzustellen, die zumindest teilweise einen Zustand eines weiteren Schalters (22) steuert;
Steuern des weiteren Schalters (22) derart, dass er sich in einem ersten Zustand befindet, um die Versorgung des Knallgasgenerators (12) mit elektrischer Energie zu ermöglichen, wenn die Umgebungstemperatur des Knallgasgeneratorsystems (10) bei oder unter einem Umgebungstemperaturschwellenwert liegt; und
Steuern des weiteren Schalters (22) derart, dass er sich in einem zweiten Zustand befindet, um die Verhinderung der Versorgung des Knallgasgenerators (12) mit elektrischer Energie zu ermöglichen, wenn die Umgebungstemperatur über dem Umgebungstemperaturschwellenwert liegt.

13. Knallgasgenerator-Steuersystem (14) nach Anspruch 12, wobei das Steuergerät (24) ferner dazu konfiguriert ist, den Zustand des weiteren Schalters (22) als Reaktion auf eine Ausgabe (26-1, 26-2, 26-3) zu steuern von einem oder mehreren von: einem Energieversorgungsmessgerät (44), das dazu konfiguriert ist, einen Energieverbrauchspegelparameter einer elektrischen Energieversorgung zu messen; einem Fluidpegelmessgerät (46), das dazu konfiguriert ist, einen Fluidpegelparameter einer Fluidversorgung (61) für das Knallgasgeneratorsystem (10) zu messen; und einem Fluiddurchflussmengenmessgerät (48), das dazu konfiguriert ist, einen Fluiddurchflussmengenparameter eines Fluids zu messen, das dem Knallgasgenerator (12) zugeführt wird.

14. Knallgasgenerator-Steuersystem (14) nach einem der vorhergehenden Ansprüche, wobei das Steuergerät (24) konfiguriert ist zum:
Empfangen einer Ausgabe (26-6) von einem zweiten Fluidtemperaturmessgerät (54), wobei die empfangene Ausgabe (26-6) von der Messung eines zweiten Fluidtemperaturparameters des Fluids abhängig ist, welches Fluid dem Knallgasgenerator (12) zugeführt werden soll; und
Betreiben eines Kühlers (42), wobei der Kühler (42) dazu konfiguriert ist, so zu arbeiten, dass er Wärme von einem Fluid im Fluidzirkulationspfad überträgt, wenn die gemessene zweite Fluidtemperatur über einem zweiten Fluidtemperaturschwellenwert liegt.

15. Computerprogramm (32), umfassend Computerprogrammanweisungen, um zu bewirken, dass das Knallgasgenerator-Steuersystem (14) nach Anspruch 10 die Schritte des Verfahrens nach einem der Ansprüche 1 bis 9 ausführt.

## Revendications

1. Procédé de commande d'un générateur d'oxy-hydrogène (12) dans un système générateur d'oxy-hydrogène gazeux (10), le procédé comprenant :
la réception (100) d'une sortie (26) provenant d'un ou plusieurs dispositifs de mesure (20), la sortie reçue (26) dépendant de la mesure d'un ou plusieurs paramètres associés au système générateur d'oxy-hydrogène gazeux (10) ; et
la commande (114) d'un commutateur (36), pour commander le fonctionnement du générateur d'oxy-hydrogène gazeux (12), en fonction de la valeur desdits un ou plusieurs paramètres mesurés, le commutateur (36) présentant un premier état et un second état,
ladite commande (114) du commutateur (36) comprenant :
la commande (114) du commutateur (36) pour qu'il se trouve dans le premier état, pour faciliter l'approvisionnement d'énergie électrique à un appareil de chauffage (38) configuré pour chauffer un fluide dans un trajet de circulation de fluide du système générateur d'oxy-hydrogène gazeux (10) qui est acheminé vers le générateur d'oxy-hydrogène gazeux (12), lorsqu'une première température de fluide mesurée au niveau d'une première position dans le trajet de circulation de fluide du système générateur d'oxy-hydrogène gazeux (10) est inférieure ou égale à un premier seuil de température de fluide ; et
la commande (114) du commutateur (36) pour qu'il se trouve dans le second état, pour faciliter l'empêchement de l'approvisionnement d'énergie électrique à l'appareil de chauffage (38), lorsque la première température de fluide est supérieure au premier seuil de température de fluide.

2. Procédé selon la revendication 1, comprenant en outre la mesure (112), au niveau d'un premier dispositif de mesure de température de fluide (52), de la première température de fluide dans le trajet de circulation de fluide du système générateur d'oxy-hydrogène gazeux (10), et la fourniture d'une sortie (26-5) à un dispositif de commande (24) en fonction de la comparaison entre la première température de fluide mesurée et le premier seuil de température de fluide.

3. Procédé selon la revendication 1 ou la revendication 2, comprenant en outre :
la commande (110) d'un autre commutateur (22) pour qu'il se trouve dans un premier état, pour faciliter l'approvisionnement d'énergie électrique au générateur d'oxy-hydrogène gazeux (12), lorsqu'une température ambiante du système générateur d'oxy-hydrogène gazeux (10) est inférieure ou égale à un seuil de température ambiante ; et
la commande (110) de l'autre commutateur (22) pour qu'il se trouve dans un second état, pour faciliter l'empêchement de l'approvisionnement d'énergie électrique au générateur d'oxy-hydrogène gazeux (12), lorsque la température ambiante est supérieure au seuil de température ambiante.

4. Procédé selon la revendication 1 ou la revendication 2 comprenant en outre :
la commande (110) d'un autre commutateur (22) pour qu'il se trouve dans un premier état, pour faciliter l'approvisionnement d'énergie électrique au générateur d'oxy-hydrogène gazeux (12), ledit autre commutateur étant commandé pour se trouver dans le premier état lorsque chacune des une ou plusieurs conditions parmi :
- une température ambiante du système générateur d'oxy-hydrogène gazeux (10) est inférieure ou égale à un seuil de température ambiante ;
- un niveau de puissance d'une alimentation électrique configurée pour délivrer de l'énergie électrique au système générateur d'oxy-hydrogène gazeux (10) est supérieur ou égal à un seuil de niveau de puissance ;
- un niveau de fluide d'une alimentation en fluide (61) pour le système générateur d'oxy-hydrogène gazeux (10) est supérieur ou égal à un seuil de niveau de fluide ; et
- un débit de fluide d'une alimentation en fluide pour le système générateur d'oxy-hydrogène gazeux (10) est supérieur ou égal à un seuil de débit de fluide,
est remplie ;
et l'autre commutateur est commandé pour qu'il se trouve dans le second état lorsqu'une ou plusieurs conditions parmi :
- une température ambiante du système générateur d'oxy-hydrogène gazeux (10) est supérieure au seuil de température ambiante ;
- un niveau de puissance d'une alimentation électrique configurée pour délivrer de l'énergie électrique au système générateur d'oxy-hydrogène gazeux (10) est inférieur au seuil de niveau de puissance ;
- un niveau de fluide d'une alimentation en fluide (61) pour le système générateur d'oxy-hydrogène gazeux (10) est inférieur au seuil de niveau de fluide ; et
- un débit de fluide d'une alimentation en fluide pour le système générateur d'oxy-hydrogène (10) est inférieur au seuil de débit de fluide,
sont remplies.

5. Procédé selon la revendication 3 ou la revendication 4, comprenant en outre la mesure (96), au niveau d'un dispositif de mesure de température ambiante (50), de la température ambiante pour le système générateur d'oxy-hydrogène gazeux (10), et la fourniture d'une sortie (26-4) pour un dispositif de commande (24) en fonction de la comparaison entre la température ambiante mesurée et le seuil de température ambiante.

6. Procédé selon la revendication 5, ledit premier seuil de température de fluide étant d'une valeur comprise entre 40°C et 50°C et le seuil de température ambiante étant d'une valeur comprise entre 60°C et 70°C.

7. Procédé selon l'une quelconque des revendications précédentes, comprenant en outre :
la mesure (116) d'une seconde température de fluide au niveau d'une seconde position dans le trajet de circulation de fluide du système générateur d'oxy-hydrogène gazeux (10) ; et
la commande d'un appareil de refroidissement (42) configuré pour fonctionner de manière à transférer la chaleur d'un fluide dans le trajet de circulation de fluide lorsque la seconde température de fluide mesurée est supérieure à un second seuil de température de fluide.

8. Procédé selon la revendication 7, ledit second seuil de température de fluide étant d'une valeur comprise entre 50°C et 60°C.

9. Procédé selon l'une quelconque des revendications précédentes, comprenant en outre la circulation (120) d'un fluide vers le générateur d'oxy-hydrogène gazeux (12) pour un processus d'électrolyse au niveau du générateur d'oxy-hydrogène gazeux (12), ledit fluide étant une solution comprenant de l'eau distillée et un électrolyte, ledit électrolyte étant de l'hydroxyde de potassium d'une pureté comprise entre 90 % et 100 %, et ledit hydroxyde de potassium étant fourni dans la solution dans une plage allant de 0,5 g par litre d'eau distillée à 1,2 g par litre d'eau distillée.

10. Système de commande de générateur d'oxy-hydrogène gazeux (14) destiné à commander un générateur d'oxy-hydrogène gazeux (12) dans un système générateur d'oxy-hydrogène gazeux (10), le système de commande de générateur d'oxy-hydrogène gazeux (14) comprenant :
un dispositif de commande (24) configuré pour recevoir une sortie (26) d'un ou plusieurs dispositifs de mesure (20), la sortie reçue dépendant de la mesure d'un ou plusieurs paramètres associés au système générateur d'oxy-hydrogène gazeux (10), le dispositif de commande (24) étant en outre configuré pour commander un commutateur (36), pour commander le fonctionnement du générateur d'oxy-hydrogène gazeux (12), en fonction de la valeur desdits un ou plusieurs paramètres mesurés, le commutateur (36) présentant un premier état et un second état,
ledit commutateur (36) étant configuré pour faciliter l'approvisionnement d'énergie électrique à un appareil de chauffage (38) configuré pour chauffer un fluide dans un trajet de circulation de fluide du système générateur d'oxy-hydrogène gazeux (10) qui est acheminé vers le générateur d'oxy-hydrogène gazeux (12) lorsqu'il se trouve dans le premier état et pour faciliter l'empêchement de l'approvisionnement d'énergie électrique au dispositif de chauffage (38) lorsqu'il se trouve dans le second état,
ledit commutateur (36) étant commandé pour qu'il se trouve dans le premier état lorsqu'une première température de fluide mesurée au niveau d'une première position dans le trajet de circulation de fluide du système générateur d'oxy-hydrogène gazeux (10) est inférieure ou égale à un premier seuil de température de fluide, et ledit commutateur (36) étant commandé pour qu'il se trouve dans le second état lorsque la température du premier fluide est supérieure au premier seuil de température de fluide.

11. Système de commande de générateur d'oxy-hydrogène gazeux (14) selon la revendication 10, l'un desdits un ou plusieurs dispositifs de mesure (20) étant un premier dispositif de mesure de température de fluide (52) configuré pour mesurer un premier paramètre de température de fluide d'un fluide devant être délivré au générateur d'oxy-hydrogène gazeux (12), et configuré pour fournir une sortie (26-5), en fonction du premier paramètre de température de fluide, qui, au moins en partie, commande l'état du commutateur (36).

12. Système de commande de générateur d'oxy-hydrogène gazeux (14) selon la revendication 10 ou la revendication 11, ledit dispositif de commande (24) étant en outre configuré pour :
recevoir une sortie (26-4) d'un dispositif de mesure de température ambiante (50) configuré pour mesurer une température ambiante de l'air entourant le générateur d'oxy-hydrogène gazeux (12), et configuré pour fournir une sortie, en fonction de la température ambiante, qui, au moins en partie, commande l'état d'un autre commutateur (22) ;
commander l'autre commutateur (22) pour qu'il se trouve dans un premier état, pour faciliter l'approvisionnement d'énergie électrique au générateur d'oxy-hydrogène gazeux (12), lorsque la température ambiante du système générateur d'oxy-hydrogène gazeux (10) est inférieure ou égale à un seuil de température ambiante ; et
commander l'autre commutateur (22) pour qu'il se trouve dans un second état, pour faciliter l'empêchement de l'approvisionnement d'énergie électrique au générateur d'oxy-hydrogène gazeux (12), lorsque la température ambiante est supérieure au seuil de température ambiante.

13. Système de commande de générateur d'oxy-hydrogène gazeux (14) selon la revendication 12, ledit dispositif de commande (24) étant en outre configuré pour commander l'état de l'autre commutateur (22) en réponse à une sortie (26-1, 26-2, 26- 3) d'un ou plusieurs dispositifs parmi : un dispositif de mesure d'alimentation électrique (44) configuré pour mesurer un paramètre de niveau de consommation d'énergie d'une alimentation électrique ; un dispositif de mesure de niveau de fluide (46) configuré pour mesurer un paramètre de niveau de fluide d'une alimentation en fluide (61) pour le système générateur d'oxy-hydrogène gazeux (10) ; et un dispositif de mesure de débit de fluide (48) configuré pour mesurer un paramètre de débit de fluide d'un fluide délivré au générateur d'oxy-hydrogène gazeux (12).

14. Système de commande de générateur d'oxy-hydrogène (14) selon l'une quelconque des revendications précédentes, ledit dispositif de commande (24) étant configuré pour :
recevoir une sortie (26-6) provenant d'un second dispositif de mesure de température de fluide (54), la sortie reçue (26-6) dépendant de la mesure d'un second paramètre de température de fluide, lequel fluide doit être délivré au générateur d'oxy-hydrogène gazeux (12) ; et
faire fonctionner un appareil de refroidissement (42), l'appareil de refroidissement (42) étant configuré pour fonctionner de manière à transférer la chaleur d'un fluide dans le trajet de circulation de fluide, lorsque la seconde température de fluide mesurée est supérieure à un second seuil de température de fluide.

15. Programme informatique (32) comprenant des instructions de programme informatique destinées à amener le système de commande de générateur d'oxy-hydrogène gazeux (14) selon la revendication 10 à exécuter les étapes du procédé selon l'une quelconque des revendications 1 à 9.
